## Europäisches Patentamt

## European Patent Office

## Office européen des brevets

(19)

(11) **EP 0 788 408 B1**

(12) **EUROPEAN PATENT SPECIFICATION**

(45) Date of publication and mention
of the grant of the patent:
**28.11.2001 Bulletin 2001/48**

(51) Int Cl.7: **B05C 9/06**, C09J 7/02

(21) Application number: **95934984.6**

(22) Date of filing: **15.09.1995**

(86) International application number:
**PCT/US95/11734**

(87) International publication number:
**WO 96/08319 (21.03.1996 Gazette 1996/13)**

(54) **METHOD AND APPARATUS FOR MULTILAYER DIE COATING**

VERFAHREN ZUR HERSTELLUNG EINES MEHRSCHICHT-KLEBEMITTELS DURCH
EXTRUSIONSBESCHICHTUNG UND BESCHICHTUNGSKOPF

PROCEDE ET APPAREIL POUR APPLIQUER PLUSIEURS COUCHES DE REVETEMENTS AU
MOYEN D'UNE FILIERE

(84) Designated Contracting States:
**AT BE CH DE DK ES FR GB GR IE IT LI LU MC NL
PT SE**

(30) Priority: **16.09.1994 US 307944
07.06.1995 US 472805
07.06.1995 US 483509**

(43) Date of publication of application:
**13.08.1997 Bulletin 1997/33**

(73) Proprietor: **AVERY DENNISON CORPORATION
Pasadena, California 91103 (US)**

(72) Inventors:
• **SARTOR, Luigi
Pasadena, CA 91103 (US)**

• **HUFF, Stephen, C.
Pasadena, CA 91103 (US)**
• **KISHI, Craig, N.
Pasadena, CA 91103 (US)**

(74) Representative: **Harding, Charles Thomas
D. Young & Co.
21 New Fetter Lane
London EC4A 1DA (GB)**

(56) References cited:
**EP-A- 0 566 124        WO-A-91/11750
WO-A-95/29763        DE-A- 3 235 151
DE-A- 4 112 428**

Note: Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid. (Art.
99(1) European Patent Convention).

**Description**

Field of the Invention

The present invention relates to die coating, and more particularly, to a multilayer die coating method and apparatus in which two or more thin layers of liquids are simultaneously coated onto a substrate.

Background of the Invention

There is a tremendous demand for sheets or other substrates having coated thereon thin layers or "films" of liquids, in particular, polymeric liquids such as pressure-sensitive adhesives (PSAs). Such PSA liquids fall into at least three categories, including emulsions, hot melts, and solvent-based solutions; however, there are numerous types of PSAs within these and other categories exhibiting a wide variety of fluid characteristics. There are also numerous other kinds of liquids which require coating onto some type of substrate.

Typically, such a substrate with the thin film coating thereon is formed into rolled materials, which then undergo a "converting" process wherein they may be printed, die cut, and otherwise formed into a wide variety of end products, including labels, identification systems, tapes, etc. These rolled, coated materials often exhibit a sandwich construction, meaning that the substrate is coated with multiple layers of liquid PSA adhesives or other liquids which then receive a top sheet comprising some type of facestock. There is almost an endless variety of such multilayer products made up of numerous different kinds of backing sheets, coatings, and facestocks.

EP-A-0566124 discloses a coating apparatus for forming one or more coating layers on a substrate by means of an extrusion-type head comprising a front edge located on an upstream side with respect to a moving direction of the substrate and a back edge which is located on a downstream side in the moving direction of the substrate. The back edge has a corner portion partially defining an extrusion slot and which is displaced further from the substrate than the front edge in a state in which a precoating solution comprised mainly of an organic solvent is applied in advance on a coating surface of the substrate. A chamfered surface is formed on the corner portion.

WO-A-91/11750 discloses a photographic element comprising a photosensitive layer, a flexible cellulose organic ester support film, and a substantially transparent magnetic recording layer having a dried thickness of less than about 1.5 micron. The method of preparing the element comprises the steps of continuously extruding layer of a cellulose organic acid ester solution from a hopper toward a polished casting surface which is moving relative to the hopper; continuously extruding simultaneously a layer of a magnetic dispersion from the same hopper onto the extruded layer of cellulose organic acid ester; depositing the combined layers onto the casting surface with the cellulose organic acid ester layer engaging the polished surface; and stripping the combined support film and magnetic recording layer from the casting surface when the layers are sufficiently set to be self-supporting and to allow such stripping.

DE-A-3235151 discloses an apparatus for applying composite adhesives, or adhesives composed of several coats of varying composition, to a carrier, for the manufacture of self-adhesive tape. The apparatus provides for the use of one single special multiple-applicator head for the simultaneous application of two or more coats, or two or more applicator heads arranged along the applicator machine, in one or more successive station(s).

At present, in the production of such multilayer products, each layer is typically coated individually in a single pass through a coating device. The coating may be applied to any type of substrate, including a release liner or even to the facestock. The coating is then typically oven dried or solidified by cooling in the case of hot melt PSAs. If additional layers of coatings are to be applied thereon, the rolled material, having previous coating layers applied thereto, undergoes another coating operation. Ultimately, it is common for a backing and a facestock, each having any number of layers applied thereto, to be laminated together to form the final multilayer product. A number of coating techniques may be utilized; however, interference coating or proximity coating is commonly used for the single-layer coating of the type described. In either case, the liquid to be coated in a single layer on the substrate is fed past an elongated slot formed in a die (thus, this technique is also sometimes referred to as "slot coating"). The slot is positioned at approximately a right angle to the direction of travel of the rolled substrate, which is usually referred to as a "web". The die is stationary, but the head of the die, comprising two "lips" which define the opening of the slot, are placed adjacent to the web. The web travels around a back-up roll as it passes in front of the lips. The slot formed by the lips and the web have substantially equal widths, such that the entire cross web width of the web is coated in one pass by the fluid as it flows out of the die and onto the moving web.

If properly designed and adjusted, the die will distribute the liquid evenly and uniformly across the web in a thin layer. Typically, the die can be adjusted radially to move toward or away from the web, thus determining the gap between the lips and the web, also referred to as the "coating gap". In addition, the angle of the lip surfaces with respect to the web, or "angle of attack", can also be adjusted. For a given coating thickness, the flow parameters of the liquid can be determined, including the flow rate. Once these parameters are determined and the die is "set" in the coating machine, usually only the coating gap and angle of attack are adjusted during operation.

However, because of the extremely thin layers being coated, any such adjustments usually inject a certain degree of imprecision into the process.

For example, it is common for such single-layer coatings to be in the range of 2-50 microns. Moreover, the difficulty in accurately coating such layers is increased by their relatively high viscosity, usually in the range of 50-50,000 milliPascal-seconds (mPa-sec). In addition, the pressures and shear rates experienced during coating often will vary by several orders of magnitude. For example, some types of PSA liquids experience pressures in the range of 63.3 kg./cm$^2$ (900 psi). The die must be able to coat liquids having these parameters at relatively high production rates, e. g., web speeds in the range of 50-350 meters per minute or higher.

There are also physical limitations on the accuracy of the die itself. For example, it is very difficult to hold extremely small tolerances on the lip geometries of the die, especially over the width of the slot which may vary between a few and a hundred or more inches. Thus, in order to achieve as much precision as possible, in the case of interference coating the lips of the die are actually pressed forward into the web which is supported by a back·up roll typically constructed from a hard rubber material, which in turn deforms in response to the forward pressure of the die. The downstream lip and most of the upstream lip do not contact the web because they hydroplane on a thin layer of liquid, although in some cases a portion of the upstream lip can contact the web. Thus, such deformation compensates for any imprecision in the configuration of the die lips. On the other hand, this technique has the disadvantage of increasing the rate of wear of the die lips (especially the upstream lip), further injecting inaccuracies into the process. Moreover, under these circumstances, any imperfections in the roll (e.g. eccentricities or "roll runout") will be magnified. Another disadvantage of interference coating is that the passage of a splice in the web may be difficult.

In another type of coating, proximity coating, the lips of the die are set back a precise distance away from the web. The back-up roll is typically constructed from a stainless steel material which allows for precision in the circumferential shape of the roll. Thus, unlike interference coating, the back-up roll in proximity coating is less likely to exhibit eccentricities (also referred to as "roll run-out") as it rotates.

To further achieve precise single-layer coating, a number of techniques have been developed. For example, it is well known that the configuration of the lips can be adjusted with respect to the web in order to improve coating accuracy and uniformity. Also, it is well known to angle or cant the downstream lip of the die so that it is somewhat convergent with respect to the web. This has the advantage of providing a smooth surface for the coating and avoids "ribbing" and other defects in the coating. This lip convergence is typically accomplished by adjusting the angle of attack of the die so that the lips are angled to face the oncoming web (defined herein as negative degrees of angle of attack).

However, adjustments in the angle of attack of the die affect the fluid mechanics of the overall "bead" of liquid. The bead is defined as that portion of the liquid captured between the die lips and the web, along the two longitudinal sides, and between the two ends of the bead defined as the upstream meniscus and the downstream meniscus or film-forming region. Thus, if the convergence is too large, the flow sees a large pressure gradient which has a tendency to force the liquid upstream. If the bead advances in the upstream direction, it is likely to explode, since the pressure gradient varies quadratically in this region. This results in "upstream leakage" of the liquid, obviously resulting in poor coating performance. Therefore, another single-layer coating technique is to position the upstream lip so as to increase the pressure drop along this die lip. This has the effect of ensuring that the bead remains under the lips or is "sealed."

Another disadvantage of such larger pressure gradients is the resulting shear rate experienced by the liquid. In single layer coating where viscosity is determined only by the properties of one liquid, the negative side effects of such high shear rate are limited to poor film quality whenever the high shear stresses redistribute the film in the cross-web direction, or when they cause material breakdown in shear sensitive liquids. Additionally, for multilayer coating, where viscosity may vary due to the existence of multiple liquids, although not completely understood, it is observed that this high shear rate (or even a lower shear rate experienced over a given period of time, such as, for example, the time it takes the liquid to flow along a longer lip) causes the fluid to vary from a stable, two-dimensional flow to take on a three-dimensional flow profile. In other words, the flow, in the face of shear stresses, attempts to rearrange itself into a three-dimensional pattern in order to reduce the resistance to flow. As a result of this three-dimensional flow, the liquid undergoes a certain amount of convective mixing in between the layers.

There are other sources of imprecision in single-layer coating. For example, it may be difficult to correctly control the viscosity of the liquid or the velocity of the web. The web itself may be a relatively uneven or irregular surface, thus increasing the difficulty in applying a uniform coating thickness thereto. Foreign particles or other materials may be deposited onto the web or entrained into the liquid. Moreover, even slight variations in ambient pressure can affect coating accuracy. Any one of these events can result in a "perturbation" or variation from steady-state coating.

Notwithstanding the foregoing difficulties, good results can usually be obtained with present single-layer coating techniques. The process can be quite forgiving. That is, perturbations or other instabilities often do not have a substantial effect on the performance of the end product. In addition, if the flow is stable, the effect of a perturbation is likely to dampen out very quickly, thus minimizing the severity of the defect.

However, there is an ever-present need to reduce production costs and to develop higher quality products.

In the single-layer coating process described above, a number of coating, drying, and laminating steps must occur to produce a final multilayer product. Thus, the costs of machinery and labor are relatively high. Also, it has been found that the mechanical and rheological properties of certain multilayer products may be different depending on whether the layers are coated individually or simultaneously. That is, if two wet layers are applied simultaneously to a substrate, it has been found that the end multilayer product may have improved convertibility and performance. However, in order to coat two or more layers simultaneously, the die must have two or more slots instead of one. Thus, in addition to an upstream lip and a downstream lip (which are used for single-layer coating), a multilayer die must also have intermediate or "middle" lips in order to define the appropriate number of slots or feed gaps.

Such "dual" dies, however, have not yielded successful multilayer coatings. This is because the principles of single-layer coating do not translate completely into multilayer coating. The fluid mechanics of two or more wet layers simultaneously applied to each other are different than those experienced in a single layer, and, depending upon the parameter being analyzed, can be very different. On the other hand, in certain industries, such as the photographic film industry, multilayer coating has been successfully utilized in a number of coating techniques, including slide coating, combination die/slide coating, or straight die coating. However, the liquid requirements of that industry are quite different from the PSA and other industries where highly viscous liquids are prevalent.

Thus, there is a need in the prior art for multilayer die coating capability which can yield products at production speeds and which utilizes a wide variety of liquids, including those exhibiting relatively high viscosities resulting in high pressure coating conditions.

Summary of the Invention

The present invention fills the need in the prior art by allowing the manufacture of a multilayer PSA product by substantially simultaneously coating two or more layers of a relatively viscous PSA liquid onto a substrate using a slot coating process operating at regular production rates. The slot coating process preferably comprises either an interference coating process or a proximity coating process.

More specifically, the method of the present invention preferably controls the location of the interface or separating streamline between the two or more layers of liquid being coated onto the substrate at steady state. Unlike single-layer coating, the stability of the flow (i.e., its tendency to exhibit only a steady, two-dimensional flow), particularly at the interface between the two layers, is extremely important.

The separating streamline is formed wherever any two contiguous coating layers form a separating line where they first become contiguous. Thus, the method of the present invention preferably comprises the step of regulating the pressure gradients of the contiguous layers so as to be not greater than that which would cause recirculation under the die in the contiguous layers.

In accordance with the apparatus of the present invention, a die constructed so as to coat any number of layers onto a moving substrate, wherein said die preferably comprises at least a first lip formed on the distal end of the die and at least a second lip formed on the distal end of the die. The second lip is downstream from the first lip in the sense of substrate travel, and the second lip is set back with respect to the first lip in a direction substantially perpendicular to the substrate. Thus, in the die of the present invention, said lips represent a stepped configuration relative to one another with respect to the plane of the substrate with increasing separation from the substrate in the direction of substrate travel.

Accordingly, the method and apparatus of the present invention ensures stable flow in the contiguous coating layers. An unstable flow changes its profile with respect to time. This can result in random fluctuations or regular oscillations in the flow profile, thus causing irregularities in the cross-sectional film configuration. In addition, slight perturbations in the coating process under unstable conditions may propagate, rather than dampen out quickly to a steady state condition as with stable flow. Likewise, a three-dimensional flow would result in the mixing of the two layers, or would result in cross web, nonuniform layer thickness, as well as other defects such as non-continuous layers or voids, etc. In stable, two-dimensional flow each layer has greater uniformity, thus resulting in a product of higher integrity and performance. Furthermore, if the flow is perturbed, this type of flow will return to its steady, two-dimensional flow characteristics rapidly, thus minimizing any defects in the product.

Thus, the present invention ensures stable, two-dimensional flow at the interface by controlling the interface of the flow at its upstream most position, which is referred to herein as the separating streamline or separating line. This line is defined, in the sense of web travel, as the cross-web line where the topmost streamline of the bottom flow layer first meets the bottommost streamline of the top flow layer. In the opposite direction, the separating line can be viewed as the location where the two flows separate from the die lips. Although the separating line runs completely across the web, when the die/web interface is shown from the side, it appears as a point. As noted, this separating line will occur in the region of the mouth of the downstream slot or feed gap where the flows of the bottom layer and top layer are confluent. For ease of reference, this region will be referred to herein as the "interface region." It will be understood that if the combined flow of the two layers is stable and two-dimensional in this interface region, and more particularly at the separating line, it is likely to retain such flow characteristics throughout the coating process, thus resulting in an improved end product.

In order to achieve such advantageous flow characteristics at the separating line, the present invention assists in positioning that line at the downstream corner of the die middle lip. This corner presents a straight, two-dimensional line across the die. Thus, if the separating line is coincident at this corner, one will be assured of achieving stable, two-dimensional flow. For this reason, this corner is referred to herein as the "stability point." On the other hand, it will be appreciated that unstable or three-dimensional flow conditions can cause the separating line to occur at several locations in the interface region. For example, "recirculations" in the bottom layer flow can cause the top layer flow to be pulled upstream such that it separates from a position underneath the middle lip. Likewise, vortices or other stagnant flow in the top layer can cause it to separate from the middle lip at a position within the feed gap of that flow.

In accordance with the method of the present invention, there are a number of preliminary steps, the sequence of which is not particularly important. These steps include an analysis of certain liquid parameters of the coating, the particular and precise design of the die lip geometries, and the assembly or setup of the die with respect to the moving web. Following these steps, a number of experimental coatings can be performed in order to determine an operating window for achieving successful multilayer coating. Even within this window, a higher quality window can be determined for full production coating operation. These steps assist in providing a stable, two-dimensional flow.

Stable, two-dimensional flow characteristics in the interface region are achieved in the present method by regulating the pressure gradient such that the separating line is positioned at the stability point. In accordance with one aspect of the method of the present invention, the pressure gradient can be regulated by designing and assembling a die having a particular middle lip geometry. This helps to pin or lock the separating line at the stability point. This is preferably achieved in the present method by regulating the pressure gradient in the interface region. As is well understood, the pressure gradient in this region is highly dependent on the coating gap and its relationship to the downstream film thickness. In accordance with complex but well understood principles of fluid mechanics, the pressure gradient created at a particular longitudinal portion in the bead is related to the coating gap at that point and the downstream thickness of that flow. Here, however, much care must be taken in the analysis. Indeed, for a single-layer coating the analysis is more direct, since there is only one flow, and one downstream film thickness. However, for a multilayer coating process, there are two or more flows. Thus, the pressure gradient analysis at a given point in the flow must include a determination of the coating gap at that point and the downstream film thickness of the layer(s) formed by that flow.

Each layer of coating in the present invention is preferably in the range of about 2-50 microns, and the slot coating process preferably comprises either interference coating or proximity coating. The difficulty in accurately coating such layers is increased by their relatively high viscosity, preferably in the range of 50·50,000 milliPascal-seconds. In addition, the pressures and shear rates experienced during coating often will vary by several orders of magnitude. For example, some types of PSA liquids experience pressures in the range of 63.3 kg/cm$^2$ (900 psi). The die must be able to coat liquids having these parameters at relatively high production rates, e.g., web speeds preferably in the range of 50-350 meters per minute or higher. Therefore, an analysis of the pressure gradient within a particular flow, and particularly the pressure gradient of the combined flow at the interface region, is quite complex.

The method of the present invention designs the middle and downstream die lip geometries such that the pressure gradients in the flow fix the separating line at the stability point. In one embodiment, a pressure gradient regulator designed in accordance with the method of the present invention comprises an extension of the middle lip toward the web. Therefore, the profile formed by the middle and downstream lips of the die represent a step away from the web in the direction of web travel. This step configuration may be flat or parallel with respect to the web or angled with respect thereto. It may even exhibit other designs. It is especially important that certain pressure gradients be maintained in the interface region, and particularly along the middle coating gap from the stability point toward the upstream corner of the middle lip. For flat lip designs (e.g., no angle or bevel formed on the lips), the middle and downstream lips fall into parallel planes. However, for beveled or other lip designs, the planes of the two lips may be intersecting.

It will be understood in connection with the present method that this stepped design of the die lips affects the coating gap under both the middle and downstream lips in the interface region. Since the middle lip is stepped toward the web, the coating gap under this lip will be less than that under the downstream lip. As a result, if the die is correctly positioned with respect to the web, the pressure gradient under the middle lip will be approximately zero, while the pressure gradient under the downstream lip will be negative. Again, this relationship exists at least in the interface region close to the mouth of the downstream feed gap. Due to other lip designs (such as bevels) and adjustments in the angle of attack of the die, the relationship between the pressure gradients under the middle lip and under the downstream lip may vary differently. However, in the interface region it is important that the pressure gradient at or just upstream of that region not be excessively positive in the direction of web travel.

If the pressure gradient is too high in this region, certain instabilities in the flow would occur, thus resulting in coating defects. For example, in the absence of proper pressure gradient regulation, the bottom layer flow may exhibit "recirculation" under the middle lip. This could occur, for example, if the downward step in the middle lip were not existent, thus resulting in a larger coating gap in this region. A larger coating gap results in highly positive pressure gradient in the bottom layer flow, causing it to actually flow upstream a short distance before turning around and flowing downstream. Such velocity characteristics are referred to as "recirculation" of the flow.

One of the most serious disadvantages of such recirculations in the bottom layer flow is its tendency to pull the top layer flow upstream under the middle lip and away from the stability point. Thus, the separating line moves upstream, and there is no assurance that the line will be formed in a straight and steady manner. Thus, mixing and diffusion between the two layers at their interface may be increased; therefore, the film may be mottled or blotchy. That is, in experiments, dyes were added to each of the layers in order to monitor the quality of the multilayers. Other defects can be caused by recirculations. Recirculations are of two types: open loop and closed loop. Open-loop recirculations are less damaging because any liquid entering them leaves after a short period of time (low "residence time") before continuing to flow downstream. Closed-loop recirculations, however, result in high residence time because the liquid is trapped in them. For higher temperature liquids such as hot melt PSAs, this may result in degradation, then charring, and then streaking. For PSA emulsions, the prolonged shear deformation may cause the emulsion to break down, and cause formation of particulates leading again to streaking. Moreover, all recirculations are known to prefer three-dimensional flow characteristics; that is, a recirculation is likely to cause cross-web unevenness in the multilayer interface as well as the two dimensions which define the coating gap.

On the other hand, the pressure gradient under the middle lip cannot be too negative (which might occur, for example, if the coating gap in this region were too small). Such a large pressure gradient is likely to result in upstream leakage of the fluid. Also, as mentioned above, such high pressure gradients can result in high shear stresses with other deleterious effects on the performance of the coating.

In accordance with the present method, it will also be observed that the step designed into the middle lip can be achieved by positioning that lip at the proper coating gap and moving the downstream lip further away from the web. However, there is also a tradeoff in this parameter. If the coating gap under the downstream lip then becomes too large, recirculations or vortices in the top layer flow may result. One additional type of defect that may result is known as "chatter", or a two-dimensional oscillation of the bead.

The present method further comprises, in addition to the correct design of the die lip geometries and the assembly and setup of the die with respect to the web so that correct coating gaps are achieved, a careful analysis of certain fluid parameters with respect to the liquids to be coated on the web. In particular, the method of the present invention involves an analysis of the relative viscosities of the two liquids. Preferably, the viscosity of the top layer liquid should be greater than the viscosity of the bottom layer liquid. More specifically, a top layer viscosity which is preferably about 30% greater than the bottom layer viscosity is optimal; however, successful multilayer coating can be achieved when the top layer viscosity ranges preferably from about 50% less to 100% (or even more) more than the viscosity of the bottom layer. However, it will be recognized by those of ordinary skill that these ranges may vary even outside of these boundaries for a given set of coating parameters.

This balancing of viscosities is important in order to assist the process in achieving steady, two-dimensional flow. However, because the flow experiences such high shear rates, the viscosity analysis must take into consideration the change in viscosity due to such shear rates. Thus, for example, due to shear thinning, the viscosity of any liquid being coated may vary by several orders of magnitude of milliPascal-seconds. At the same time, the shear rate may vary by four or more orders of magnitude with respect to the film coating parameters involved with the method of the present invention. In particular, shear rates above 1,000 reciprocal seconds (1/sec) are likely to be experienced under such coating conditions. Accordingly, the relative viscosities of the liquids being coated should be compared at these higher shear rates.

In addition, in accordance with a further aspect of the present method, the surface tensions of the respective liquids should preferably be analyzed, with the top liquid preferably having a lower surface tension than the bottom liquid. This condition helps to avoid the formation of voids in the top layer with respect to the bottom layer which may be formed by de-wetting phenomena.

Once the lip geometries have been designed and set with respect to the die, and the liquid parameters analyzed, another important aspect of the present method is the experimental determination of the area of operating parameters in which successful coating can be achieved. This area is often referred to as the "coating window" and may be defined in terms of a graph of coating gap versus angle of attack of the die. Thus, in order to determine a coating window, samples of the two liquids are experimentally coated at varying coating gaps and angles of attack and the coating quality is observed. The area where adequate coating is achieved is noted, including the area where very high quality coating is achieved (usually a subset of the overall coating window). It is preferable that the coating window be as large as possible so that inaccuracies in coating gap and/or angle of attack do not result in coating defects or product degradation. In order to add another dimension to the coating window, the same liquids being tested are also tested at various viscosities.

Once the coating window is determined, production coating may occur in accordance with the present method preferably at a point in the middle of the range of the angles of attack and close to the maximum coating gap and angle of attack.

In the apparatus of the present invention, another preferred feature is a multilayer coating die preferably comprising a pressure gradient regulator that provides a proper pressure gradient ahead of the interface region. However, as explained, this advantage is preferably achieved when the present die is correctly set with respect to the web in order to exhibit proper coating gap characteristics. Preferably, it has been found that the die should be set such that the coating gap under the middle lip (especially in the interface region) is approximately two times the bottom layer wet film thickness downstream of the die (before drying). It should be re-emphasized that this thickness, however, is the thickness of the bottom layer only which is being coated from this particular flow under the middle layer. On the other hand, the coating gap under the downstream lip (particularly in the interface region) should be greater than one time but not greater than two times the wet film thickness downstream. In this latter case, this thickness is the combined thickness of both layers as well as any previous layers. Thus, it will be understood that these principles apply to multilayer coating of any number of layers, with the terms "bottom layer" and "top layer" referring to any two adjacent layers. It will also be recognized that these relationships will slightly vary due to non-Newtonian characteristics of the liquids, well as other variables.

On the other hand, the present apparatus allows optimization of the multilayer coating process. In one preferred embodiment of a die constructed in accordance with the present invention, the middle and downstream lips are flat or parallel with respect to each other. Thus, any convergence of the downstream lip can be achieved by adjusting the angle of attack of the die. In another embodiment, however, the optimization of the coating process is facilitated by beveling the downstream lip so that it exhibits some convergence, even without any angle of attack adjustment. With this improvement the "operating window" of the die can be increased. This means that successful coating can be achieved, even if certain coating parameters cannot be accurately controlled. On the other hand, a larger operating window increases the chance of a larger quality window where the best coating occurs. Moreover, a large operating window allows a technician of less skill or experience to successfully perform the coating operation. In addition, a wider variety of products comprised of a broader range of liquids can be produced, even single-layer products.

In another aspect of the present die apparatus, the upstream lip is positioned toward the web with respect to the middle lip. This also achieves an increasing pressure gradient in the upstream direction and assists in sealing the bead under the die lips and avoiding upstream leakage. There is always recirculation in the bottom layer under the upstream lip. However, typically such recirculation is open so that it does not negatively affect the quality of the bottom layer. This upstream lip can be "flat" or parallel to the web, or it may be beveled or angled with respect thereto. Preferably, the bevel represents a divergence in the sense of the web travel. This profile presents a positive pressure gradient in the upstream direction, which further assists in sealing the bead.

When the upstream and downstream lips of the present apparatus are beveled, the middle lip is preferably maintained close to flat (in the sense that it is approximately parallel to the web, not taking into consideration any curvature). This can be achieved, even during operation, since angle of attack adjustments are minimized due to the beveling of the aforementioned lips. The flatness of the middle lip, together with an appropriate coating gap, provides a zero pressure gradient to the flow, which advantageously avoids recirculations and still reduces shear rate and shear stresses, as discussed above. A flat middle lip also has the advantage of reducing the risk of upstream leakage. Moreover, this middle lip is the most expensive to manufacture, and the absence of a bevel assists in reducing costs.

It should be noted that other lip geometries are possible in order to achieve the advantages of the present apparatus. Also, other forms of pressure regulation are possible.

Thus, in another aspect of the die lip geometry of the present apparatus, pressure gradient regulation can also be achieved with lip designs of a particular length, especially that of the middle and downstream lips. That is, it will be appreciated that the length of the die lips will affect the coating gap if the angle of attack of the die is adjusted. Typically, with a negative angle of attack (a convergence of the die lips with the web in the downstream direction), the coating gap at the upstream portion of each lip is greater than at the downstream portion of each lip. This is especially true, considering the curvature of the back-up roll. As noted above, if coating gaps are too great, recirculations will occur due to inappropriate pressure gradients, thus causing the loss of control of separating line position and poor coating quality.

In addition, as noted above, the flow experiences shear stresses in the bead due primarily to the rapidly moving web. Even if the shear rate is tolerable with respect to fluid properties, the duration of the shear can have damaging effects on liquid quality. The longer the lips, the greater the duration of the shear stresses experienced by the liquid. Thus, it is important when designing the die lip geometries to consider the length of the die lips for coating gap, as well as shear stress considerations.

Therefore, it is an important aspect of the present die apparatus that the lip lengths are minimized, while providing sufficient length to develop stable rectilinear flow. Perhaps the most important die lip length is the downstream lip. This lip must be long enough for the flow to develop. Such lip may be in the range of 0.1-3 millimeters in length, with about 0.8-1.2 mm being preferable. The middle lip also may range from 0.1-3 mm, but is preferably about 0.3-.7 mm in length. The upper lip, on the other hand, can be longer without suffering shear stresses in the liquid because the length of travel is reduced. Moreover, a longer upstream lip assists in sealing the bead. Thus, a lip in the range of 1-3 mm is advantageous, with about 1.5-2.5 mm being preferable.

Another aspect of the present apparatus is the angle of the upstream and downstream feed gaps with respect to each other. Because the length of the middle lip is minimized, the die center piece which forms the middle lip must be sufficiently wide to have the strength to support a finely machined die lip. It has been found that an angle between the two feed gaps of about 30 degrees is optimal; although, it will be noted that this angle does not affect the flow characteristics described herein.

Thus, the multilayer die coating apparatus of the present invention has a downstream feed gap region characterized by a pressure gradient regulator which generates stable flow at the interface between a bottom layer (including any previously coated layers) and a top layer. This pressure gradient is achieved by a combination of middle lip and downstream lip geometries, which result in an adequate pressure gradient at the interface region which is not so positive so as to cause recirculations.

Thus, an apparatus of the present invention further preferably comprises a die for the multilayer coating of thin films onto a substrate wherein the die has a pressure gradient regulator formed on the die lips, said regulator being adapted so that the die is positioned with respect to the web to avoid an excessively positive pressure gradient just upstream of the interface region. The invention further comprises a die wherein said pressure gradient regulator comprises a stepped geometry with respect to the downstream corner of the middle lip and the upstream corner of the downstream lip, the magnitude of said step preferably being in the range of about 0-.102 mm (0-.004 inches). The invention further comprises middle and downstream die lip lengths preferably in the range of about 0.1-3 mm, and upstream and downstream lips that may be beveled. The upstream lip is angled so as to be divergent with respect to the web in the sense of the web travel by an angle ranging preferably from about zero to two degrees. The downstream lip is angled so as to be convergent with respect to the web in the sense of web travel by an angle ranging preferably from about zero to 5 degrees.

It is preferred that a die constructed in accordance with the present invention includes planes of first and second lips, formed on a distal end of the die, which define a step function away from the substrate in the direction of the substrate travel. Further, the planes of the first and second lips preferably lie in intersecting planes. Most preferably, the die comprises a third lip formed on the distal end of the die, the third lip downstream from the second lip in the sense of substrate travel and set back with respect to the second lip in a direction substantially perpendicular to the substrate.

In summary, the multilayer die coating method and apparatus of the present invention enhances the optimization of the coating process. In the method of the present invention, the step of regulating the pressure gradients of two contiguous layers preferably comprises the step of positioning the location of the separating line with respect to the die so that the flow of a top layer does not invade the flow of a bottom layer. Further, it is preferred that the viscosity of a top layer is greater than the viscosity of a bottom layer, and it is also preferred that the viscosity of the top layer is greater than the viscosity of the bottom layer at the higher rates of travel of the substrate. The method of the present invention preferably uses a die having a downstream lip and an upstream lip, with the method comprising the step of positioning the separating line at the downstream edge of the upstream lip.

Thus, a person of ordinary skill or even less than ordinary skill can adjust coating gap, angle of attack, feed gap, flow, and web parameters in order to achieve successful coating. The present invention can be utilized with a wide variety of coatings and substrates in order to produce many existing products at lower cost, as well as newer products. New coating machines can be produced less expensively, and old coating machines can be made more versatile with the present invention.

Brief Description of the Drawings

FIGURE 1 is a perspective view of a multilayer die which may be utilized in the present invention, the die being positioned adjacent to a moving web traveling around a back-up roll.

FIGURE 2 is a graph of shear rate versus viscosity for three sample liquids to be coated onto a web in accordance with the present invention.

FIGURE 3 is a second graph of shear rate versus viscosity for different sample liquids to be coated.

FIGURE 4 is a close-up cross-sectional view of a coating gap formed between a single layer die and a moving web illustrating certain principles of fluid mechanics utilized in the present invention.

FIGURES 5a, 5b, 5c, and 5d are schematic illustrations of the velocity profiles formed within the coating gap illustrated in FIGURE 4 under certain coating conditions.

FIGURE 6 is a close-up cross-sectional view of the coating gap of the multilayer die shown in FIGURE 1, further illustrating the adjustment of the various coating parameters in accordance with the present invention.

FIGURE 7 is a close-up cross-sectional view of the interface region of the coating gap shown in FIGURE 6 illustrating in more detail the relationship between lip geometries and the coating gap adjustment steps of the present invention.

FIGURE 8 is a schematic illustration of the recirculation that may occur in the bottom layer liquid if the steps of the present invention are not followed.

FIGURE 9 is a schematic illustration of a vortex that may be'formed in the bottom layer liquid if the steps of the present invention are not followed.

FIGURE 10 is a close-up cross-sectional view of the multilayer die of FIGURE 7, illustrating the step of adjusting the die with a negative angle of attack with respect to the web.

FIGURE 11 is a schematic illustration of the recirculations that may occur under the die lips when the angle of attack adjustment shown in FIGURE 10 results in excessively large coating gaps at the upstream portions of the lips.

FIGURE 12 is a close-up cross-sectional view illustrating the step of the present invention of beveling the upstream and downstream lips.

FIGURE 13 is a schematic view of the recirculations that may occur in the feed gaps if they are not properly sized in accordance with the present invention.

FIGURE 14 is a graph of coating gap versus angle of attack illustrating the step of experimentally determining a successful coating window as well as the quality window for a particular set of coating parameters.

## Detailed Description of the Invention

Before describing in detail the present invention, it will be noted that the present invention is not limited to the coating of two layers, but further comprises the coating of any number of a plurality of layers, including the simultaneous coating of a single liquid in multiple layers. Thus, the drawings and descriptions thereof should not be considered limiting with respect to the scope of the present invention; moreover, the method of the present invention should not be limited to any particular sequence with respect to its steps, except where expressly noted.

### Overview of Die Coating

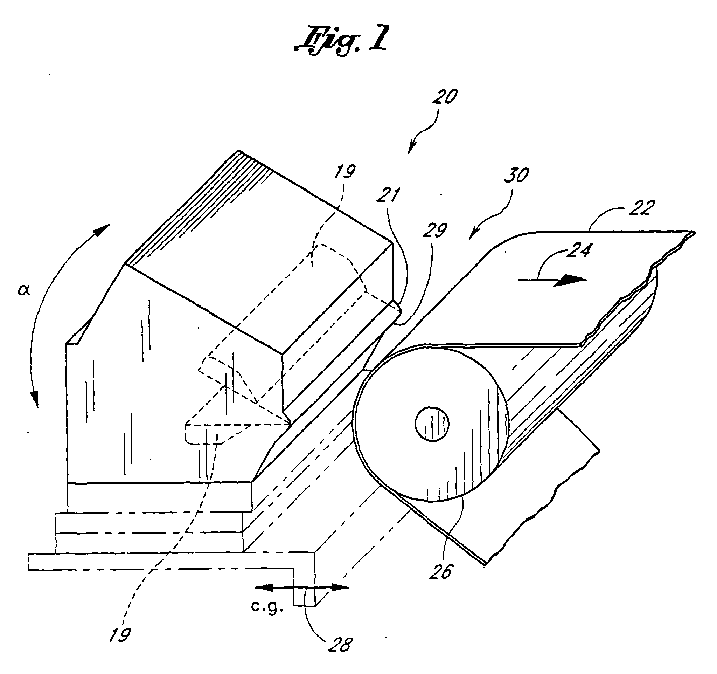

Referring to FIG. 1, there is illustrated somewhat schematically a typical die coating operation. The die 20 is shown positioned adjacent to a moving substrate or web 22 traveling in the direction of arrow 24. The web 22 travels around a back-up roll 26 as it passes across the distal end of the multilayer die 20. As shown in FIG. 1, it will be understood that both the die 20 and the web 22 have substantially equal widths, such that most of the entire width of the substrate or web is coated in one pass by the fluid flowing out of the die and onto the web.

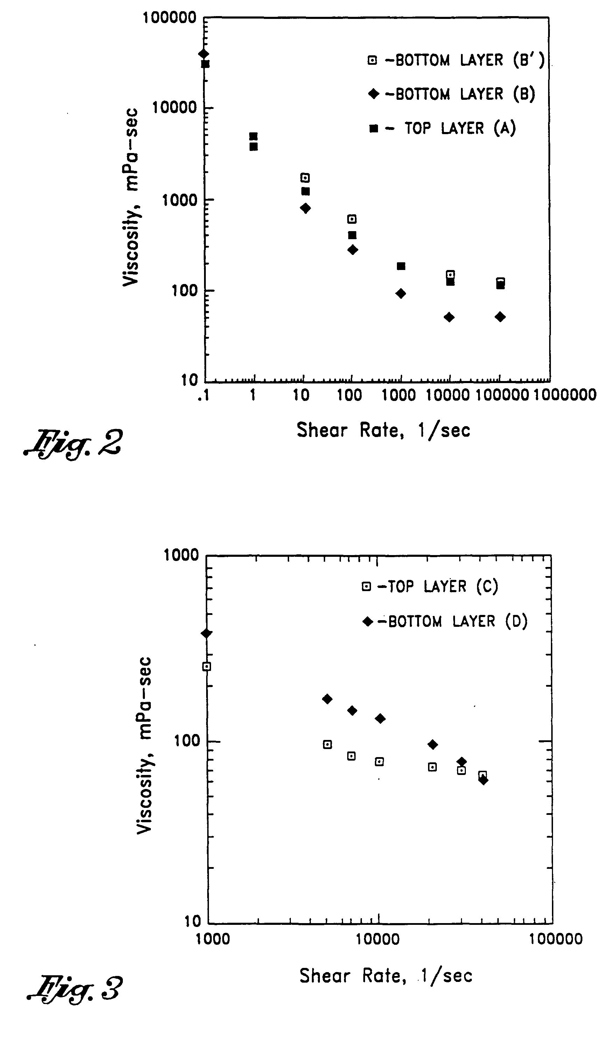

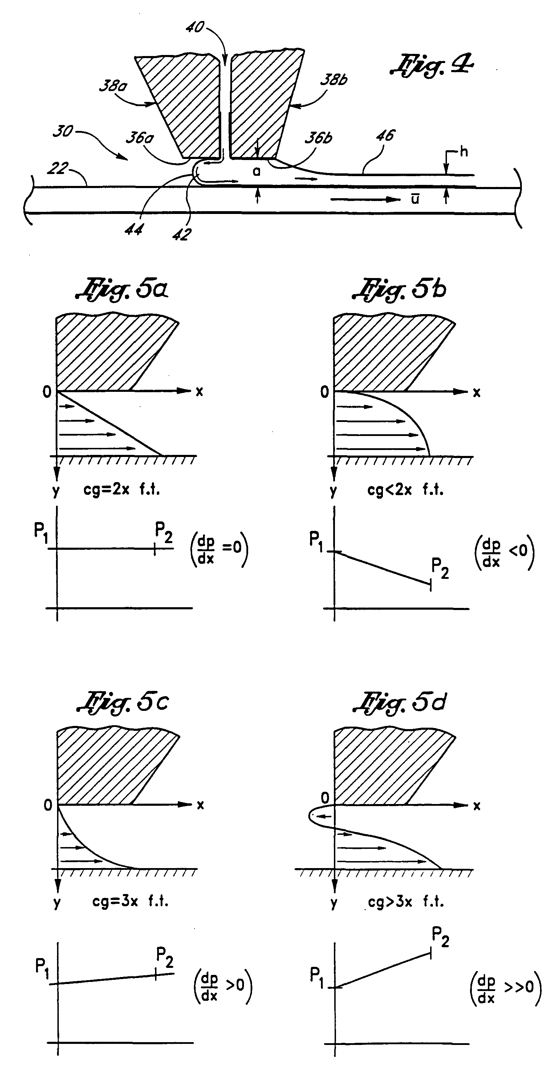

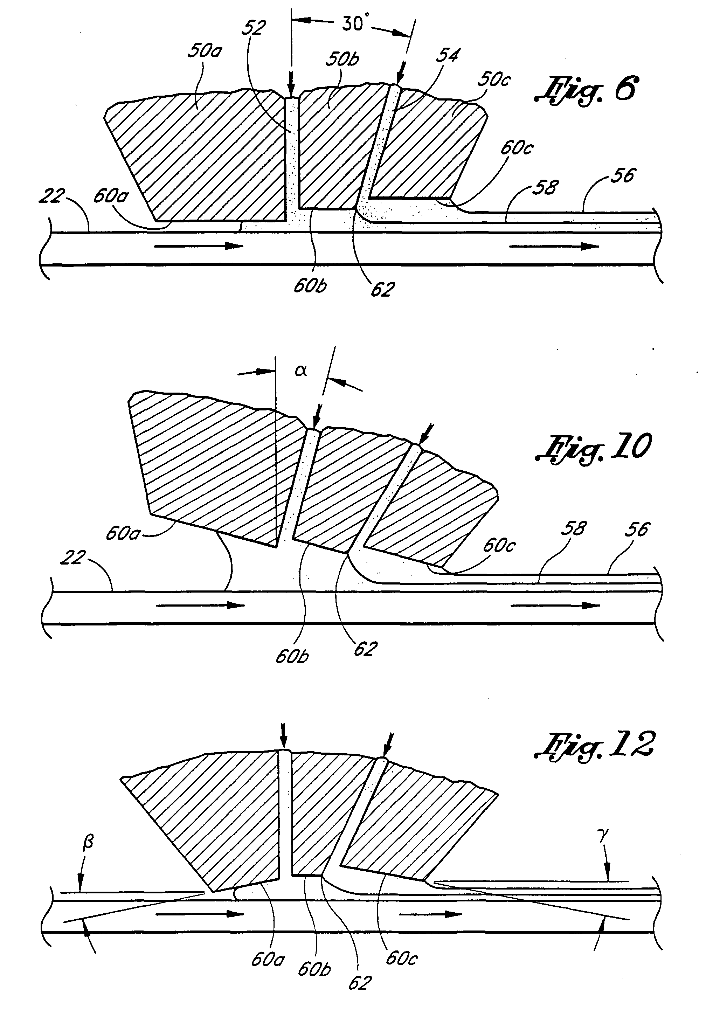

The die 20 is modular in that it can be assembled from a number of individual elements and then set in the coater machine as an integral device. Each die element is comprised typically of a manifold 19 and a more distal die section 21. The most distal portion of the die section is referred to as the die lip 29, described and illustrated in more detail in connection with FIG. 4. Since the die 20 is modular, various combinations of die lips 29 can be assembled without necessitating modifications to the other die sections and lips 29.

As illustrated by the horizontal arrow 28 in FIG. 1, the die 20 can be moved radially into or away from the back-up roll 26 in order to adjust the coating gap 30, which is defined as the distance between the die lips 29 and the web 22. In addition, the angle of attack ($\alpha$) of the die 20 can be adjusted, as shown by the arrow in FIG. 1.

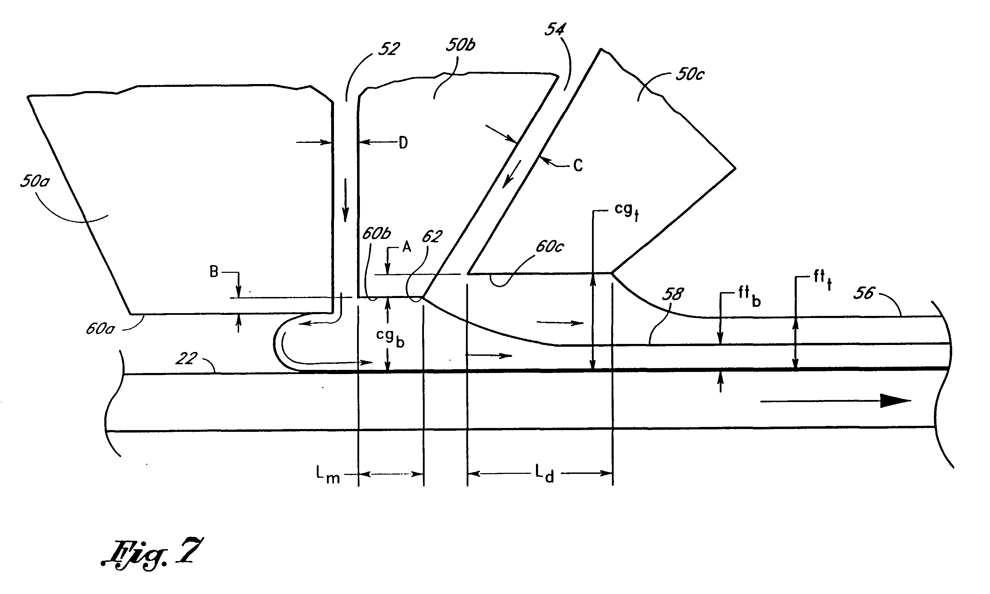

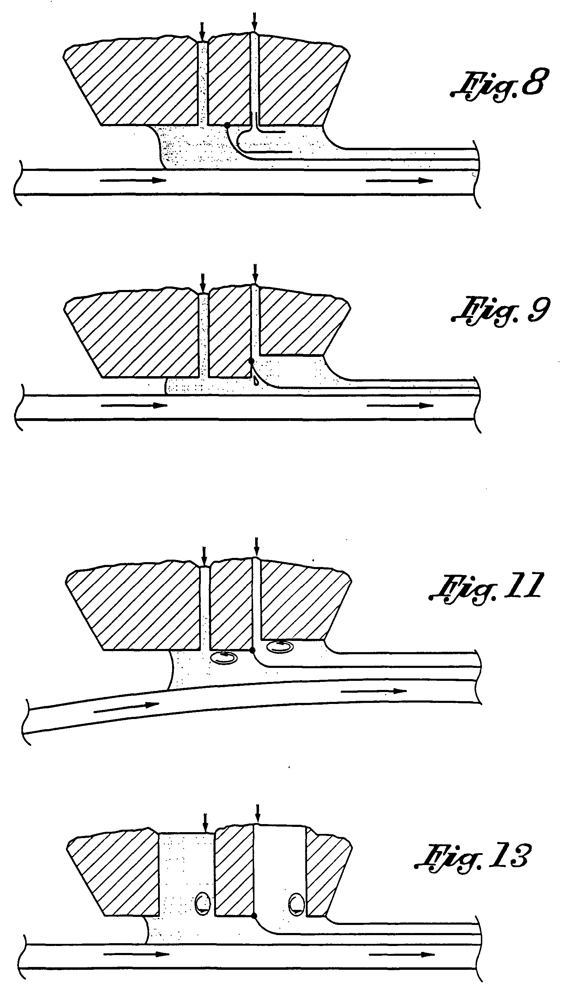

The elements of the die 20 are separated from each other slightly by slots or feed gaps which allow the coating material to flow from a manifold 19 in the die 20, through these feed gaps in the die 20, and onto the moving web 22. In the multilayer die 20 of FIG. 6, two feed gaps 52, 54 are shown. However, as noted above, it will be understood that the principles of the present invention are equally applicable to a plurality of layers in addition to two.

### Method of Multilayer Die Coating

In one aspect of the method of the present invention, a uniformly layered film in the cross-web direction is achieved by the careful analysis of the viscosities and other physical parameters of the liquids to be coated onto the web to form a multilayered product. This uniformity results in a high quality product. In addition to this analysis, the method of the present invention involves the design of the die lips and their placement relative to the web in accordance with important principles of fluid mechanics, in order to regulate the pressure gradients of flow during operation. These steps of die lip design and die set-up result in the control of the separating line of two contiguous liquid layers at the stability point and the assurance of steady, two-dimensional flow. In order to ensure successful operation, a coating window (including a quality window) can be determined and an optimal operating point determined.

## Analysis of Coating Liquids

As noted above, in one important aspect of the present method, certain physical parameters of the liquids to be coated in multiple layers onto the substrate or web are analyzed with respect to the likelihood of achieving uniform film thicknesses in the cross-web direction. Of these parameters, perhaps the most important is the liquid's viscosity. More specifically, it will be understood that the ratio of viscosities of the two contiguous layers to be coated must be carefully analyzed and, if possible or practical, adjusted to a value within the optimal range.

For example, it has been observed that if the viscosity of the top layer liquid is in the range of 50% less than to 100% more than the viscosity of the bottom layer liquid better coating results are likely, although other ratios may also provide good coating results if other parameters are optimized. Optimally, the viscosity of the top layer should preferably be about 30% greater than that of the bottom layers. Viscosity ratios in this range provide a more stable flow. More specifically, a higher top layer viscosity reduces the risk of cross-web defects termed "inter-layer ribbing", in which the top and bottom layers alternate with one another across the web rather than forming two uniform films, one on top of the other.

It will be understood that the relative viscosities of the liquids to be coated are determined in large part by the nature of the multilayer product to be produced. That is, adjustments to viscosity in one liquid or the other may not be possible or practical depending on cost, supply, delivery or other variables. However, to some degree, the viscosities of the liquids may be "matched" in order to achieve favorable coating conditions. For example, if greater flow stability is desired, it may be possible to increase the viscosity of the top liquid by adding thickeners. Likewise, the viscosity of the bottom layer may be reduced by adding thinners, such as water, solvent, etc. On the other hand, such thinning agents, and especially, solvents, generate other problems such as environmental concerns, increased drying time, etc.

In analyzing viscosities, however, one must consider the shear rates experienced by the particular liquid under typical coating conditions. Such shear rates vary by several orders of magnitude, but typically exceed 1000 reciprocal seconds (1/sec) at most locations along the bead. Thus, at these shear rates, the relative viscosity of the liquids can vary widely.

FIG. 2 illustrates a shear rate/viscosity graph in which it is proposed that a top layer A be coated over a second liquid formulated at two different viscosities (B and B'), where B' is greater than B. In this graph, shear rates are displayed over a range from 0.1 to 100,000 1/sec; although, the area of analysis is at shear rates above about 1000 1/sec. It will be noted that the ratio of viscosities between layer A and layer B changes significantly at higher shear rates as compared to lower shear rates. Furthermore, based on the foregoing analysis, one would assume that the combination of liquid A over liquid B would coat well since the viscosity of A is greater than that of B. Indeed, successful coating was achieved experimentally, but initially only at lower web speeds. At higher web speeds, the bead leaked upstream, a defective condition described in more detail below. The reason this condition occurred in the present example lies in the fluid mechanics of the flow and relates to the difficulty of a lower viscosity liquid (liquid B in this example) to generate enough of an upstream pressure gradient below the upstream lip to seal a bead which downstream is made up, in part, of a more viscous liquid (A). This illustrates the interaction of several principles which need to be considered in this liquid viscosity analysis. For example, this upstream leakage condition can be corrected in several possible ways. One involves the design of the lip geometries in accordance with principles of the method of the present invention described in more detail below. Another involves the adjustment of the relative viscosities of the two liquids.

For example, when liquids A/B' were coated experimentally, good coating results were obtained over a wide range of web speeds. This is because, as FIG. 2 graphically illustrates, the viscosities of the two liquids are balanced or better matched at high shear rates. For example, the viscosity of liquid B' is more than twice that of B. It must be noted, however, that the viscosity of B' did not substantially exceed the viscosity of the top layer A.

This condition is illustrated in FIG. 3 which illustrates a shear rate versus viscosity graph for two sample liquids C and D. In this example, liquid C is to be coated on top of liquid D. In this graph, only the high shear rate viscosities need be analyzed. Thus, it will be observed from FIG. 3 that, for most of the typical shear rate range, the viscosity of the bottom layer 0 exceeds that of the top layer C. Under these inverse viscosity conditions, it has been found that it is difficult to achieve stable coating, and, although multilayer coating may be possible, it is difficult to achieve high quality. Under proper viscosity conditions, the coating window for a particular operation will be larger, thus increasing the likelihood of stable flow.

It will be appreciated, by those of ordinary skill, that a wide variety of viscosity relationships will be encountered in producing a particular multilayered product. Thus, the foregoing examples are not to be considered exhaustive of the scope of the liquid analysis encompassed within the steps of the method of the present invention.

Another aspect of liquid analysis involves the relative surface tensions of the liquids to be coated. It has been found that the risk of certain defects such as dewetting or voids, or voids in one particular layer, can be reduced if the surface tension of the top layer is less than that of the bottom layer. Under these conditions, the local surface tension (including the dynamic surface tension in the film forming region) will tend to close such voids. Surface tension can be reduced in the top layer, to some degree, by the use of effective surfactants or other organic soluble liquids (alcohol, ketone, etc.).

Thus, the liquid analysis aspect of the method in the present invention is important in achieving favorable coating conditions. The lip design and die set-up aspects of the method will be discussed together below; however, the following information relating to single layer coating will explain how those aspects of the method of the present invention assist in achieving stable flow.

**Single-Layer Fluid Mechanics**

In order to assist in understanding the advantages of the present invention, it is important to understand the relationship between the coating gap 30, the downstream wet film thickness, and the liquid pressure gradient. This can best be illustrated and explained with respect to a single-layer coating process.

Thus, referring to FIG. 4, there is shown a close-up cross-sectional, schematic view taken through a pair of die lips 36 positioned adjacent to a moving web 22 to form a coating gap 30 ("c.g."). It will be noted with respect to FIG. 1 that the die 20 has been rotated clockwise approximately 90 degrees in order to facilitate this illustration. In addition, the web 22 is shown to be flat or horizontal, whereas it actually will exhibit some curvature as it conforms to the back-up roll (not shown). However, the configuration shown in FIG. 4 is a good approximation of the fluid mechanics occurring in the bead 42 of liquid formed in the coating gap 30 between the die lips 36 and the moving web 22.

For ease of reference, "downstream" will refer to the direction of web 22 travel, while "upstream" is in the opposite direction or to the left. Thus, the upstream lip 36a is formed on the distal-most tip of the upstream die section 38a, while the downstream lip 36b is formed on the distal-most tip of the downstream die section 38b. The two die sections 38a,b form between them a coating slot or feed gap 40 out of which the liquid flows onto the moving web 22. As shown in FIG. 4, the liquid first travels upstream and then turns to flow downstream in an open recirculation within the bead 42. The bead 42 is bounded on its upstream edge by an upstream meniscus 44 and on its downstream edge by a downstream meniscus 46 or film-forming region. If the fluid, due to extreme conditions, escapes the bead 42 and travels upstream, this is referred to as upstream leakage.

The coating gap 30 is shown as dimension A in FIG. 4. It will be understood, particularly with reference to subsequent drawings, that the coating gap 30 can vary along the longitudinal length of the lips 36 in accordance with different lip geometries, lip machining defects, angled or beveled lips, adjustments and angle of attack of the die, etc.

The wet film thickness (h) of the flow is shown downstream of the bead 42. It is defined as the thickness of the flow before drying. The pressure gradient of the flow at various longitudinal positions is related to the wet film thickness (f.t.) and to the coating gap 30 at that location, it being understood that for a given flow rate (Q) the film thickness and web velocity are inversely proportional. Thus, for a Newtonian liquid flowing at steady state, the velocity is given as follows:

$$u = \frac{\overline{u}y}{a} + \frac{a^2}{2\mu}\left(\frac{dp}{dx}\right)\left[\left(\frac{y}{a}\right)^2 - \left(\frac{y}{a}\right)\right]$$

where:

u = velocity of the liquid downstream;
U = velocity of the web;
a = coating gap (c.g.);
$\mu$ = viscosity of the liquid;
x = horizontal coordinate in the downstream direction;
y = vertical coordinate going from lip to web; and
dp/dx = pressure gradient in the downstream direction.

It will be noted from this equation that the velocity of the flow (u) is made up of two components. The first component may be characterized as a "drag driven" component, wherein the velocity of flow varies in direct proportion to the speed of the web. The second component may be referred to as a "pressure driven" component, such that the velocity of flow is proportional to the pressure gradient (dpldx) at a given point. Using the definition of flow rate (0), one may integrate the above equation to solve for the pressure gradient, yielding:

$$\frac{dp}{dx} = \frac{12\mu}{a^3}\left(\frac{\bar{u}a}{2} - Q\right)$$

Since $Q=h\bar{u}$, the pressure gradient may be expressed in terms of the coating gap (a) and wet film thickness (h) as:

$$\frac{dp}{dx} = \frac{12\mu\bar{u}}{a^3}\left(\frac{a}{2} - h\right)$$

Thus, where h=(1/2)a (or, in other words, the coating gap is twice the wet film thickness), dp/dx=0. Accordingly, in accordance with these well-known relationships, the velocity of the flow and the related pressure gradient at a particular point in the bead can be determined for a given coating gap/film thickness relationship. The velocity can be plotted as a velocity profile, such as those illustrated in the series of schematic illustrations comprising FIG. 5. In all cases described below, it will be noted that while y=0 (at the die lip), the velocity of flow (u) equals zero; but while y=a (at the web), the velocity of flow equals that of the web ($\bar{u}$). Where the coating gap is set at twice the wet film thickness, then

$$\frac{dp}{dx} = 0$$

FIG. 5a illustrates a coating condition wherein the coating gap 30 is exactly equal to twice the film thickness. In this condition the pressure in the liquid is constant, giving a pressure gradient of zero.

However, as noted above, coating gap conditions can change due to a number of variables. Thus, FIG. 5b illustrates a condition where the coating gap 30 is less than two times the downstream film thickness. Under these circumstances the velocity profile is concave in the downstream direction, thus exhibiting a negative pressure gradient. This negative pressure gradient produces a pressure drop along the downstream lip 36b in the downstream direction. The pressures in the upstream regions are higher, thus adding to the velocity characteristics of the liquid and causing it to push forward or bulge the velocity profile, as shown in FIG. 5b.

On the other hand, FIG. 5c illustrates the situation where the coating gap 30 is equal to three times the film thickness (h). Under these conditions the downstream pressure gradient is greater than zero, meaning that the flow sees an increasing pressure downstream. This increase in pressure has a tendency to diminish the velocity, making the velocity profile convex in the downstream direction.

Finally, FIG. 5d illustrates the condition when the coating gap 30 is greater than three times the film thickness (h). Again, the pressure gradient is positive, but more so than that shown in FIG. 5c. Thus, an even greater downstream pressure is seen, actually causing the flow to travel upstream a short distance before it turns and travels downstream. This condition illustrates the principal cause for recirculation in the liquid. This recirculation can occur under the upstream lip 36a, as shown in FIG. 4, but may also occur under the downstream lip 36b if the coating gap 30 is too great, as illustrated in FIG. 5d.

This recirculation, while not particularly damaging to the quality of the film in single layer coating, can have disastrous effects in multilayer coating. It has been found that such conditions can be substantially avoided with correct lip design and proper die assembly and set·up. Because of their interrelationship, these aspects of the method of the present invention are discussed together below.

**Lip Design and Die Set-Up**

The method of the present invention controls the pressure gradients in the liquids under a wide variety of coating conditions in order to achieve a stable flow. This is accomplished in large part by the design of the lip geometries and the assembly, set-up, and adjustment of the die.

In designing the lip geometries for a given set of coating and liquid parameters, any particular sequence of analysis or calculation is possible. One approach is to begin with the downstream lip and move upstream, calculating each coating gap and lip length in the process.

To begin, the wet film thicknesses for the various layers must be determined. Typically, the dry film thickness for each layer is obtained from product specifications in terms of coat weight (such as grams per square meter), and the solid fraction (the percentage of solids in the liquid), the density and viscosity of the liquid formulation to be coated are known. Thus, to arrive at wet film thickness, the coat weight is divided by the product of the solid fraction and the density. This number can then be used, in accordance with the ranges and dimensions set forth above, to compute all coating and feed gaps in the die. The lip lengths and angles of bevel (or angle or attack) may also be computed in accordance with the method of the present invention to optimize the coating operation.

Beginning at the downstream edge of the downstream lip, the coating gap may be set at one time the total wet film thickness. At this value, the sufficiently negative pressure gradient in the sense of the web travel should be achieved such that smooth film surface characteristics are achieved. As discussed above, the length of this lip is then designed. Whether the lip is to be beveled or a whether a negative angle of attack is applied to the die, this lip should be convergent in the direction of web travel. With the angle and length of the downstream lip known, the coating gap at the upstream portion of that lip can be calculated so as to ensure that it falls within acceptable ranges. Where the coating gap is set at one time the wet film thickness, then

$$\frac{dp}{dx} = -\frac{6\mu \bar{u} h}{a^3}$$

In designing the downstream lip, some consideration should be given to the issue of angle of attack versus beveling. As noted above, beveling is usually advantageous since it virtually eliminates the negative trade-offs associated with angles of attack. However, beveled lips are more difficult to machine than flat lips; thus, there is some sacrifice in accuracy. There are also increased cost considerations.

Turning to the middle lip, the coating gap at the downstream region is critical, as explained above. It should be maintained at around two times the bottom-layer film thickness, and should not be so excessively positive as to cause recirculation under that lip. The length of this lip should be minimized to reduce the likelihood of developing an excessively positive coating gap whenever an angle of attack is applied to the die, but not to the extent that a rectilinear flow cannot develop.

The design of the upstream lip is dictated by pressure drop considerations along the bead. Any design adequate to seal the bead is sufficient. A divergent bevel in the web direction is preferred since the pressure drop varies quadratically with distance along the bead. This means that the position of the upstream meniscus of the bead can be controlled more easily with respect to perturbations.

Once the length and angles of the lips have been determined and desirable coating gaps calculated, the die can be assembled from its various sections. This is accomplished in accordance with well known techniques, using shim stock, etc. At the same time, however, it is important that the steps of the lips relative to one another be correctly positioned. The feed gaps must also be formed by the correct positioning of the die lands. In order to avoid recirculation, the feed gaps should not be excessively wide. Lastly, the die can be set to an initial angle of attack, as determined by the foregoing computations or the development of a coating window, discussed below.

## Coating Window

If considered necessary or desirable, ranges of various operating parameters for the die as thus designed and set-up can be determined. This is typically accomplished by experimentally coating the web using various samples of the liquids to be used in production, and by stepping through various angles of attack and coating gaps. Liquids of different viscosities may also be coated. The resulting information can be illustrated with a "coating window" indicating the parameter field within which good coating results are obtained.

FIG. 14 illustrates a typical coating window for a multilayer construction to be coated at a given web speed. As shown, various points for coating gap and angle of attack are plotted to give the boundaries of the coating window. Outside of this window, the defects noted on the graph occurred. Thus, clearly, it is desirable to maintain the operation within the coating window.

It will be noted that more negative angles of attack usually result in lower downstream coating gaps due to the rotation of the die with respect to the web. For the graph of FIG. 14, a larger downstream coating gap is represented by an angle of attack which is less negative (less convergent in the direction of web travel). Thus, in accordance with another aspect of the present invention, it is desirable to attempt to maintain the coating operation at those regions within the coating window where greater downstream lip coating gaps occur and where the angle of attack is just sufficient to avoid the ribbing defect. Operation in these regions will reduce elevated shear stresses that result in poor coating quality. However, at the same time, the coating gap must be sufficient to avoid recirculation below the middle lip.

These regions comprise a subset of the coating window which is referred to as the "quality window," and represents the area where coating quality is best. In addition, higher coating gaps (but not those that may result in excessively positive pressure gradients) are, in another way, desirable because they reduce the pressure drop along the bead and make it easier to seal at the upstream meniscus.

The trade-off here is a larger risk with respect to perturbations. That is, in the quality window, especially at a lower angle of attack, operation occurs near a defect boundary ("ribbing" in the example of FIG. 14). A perturbation may cause coating conditions, at least for some duration, to fall outside the coating window, thus resulting in a defective product. Thus, it is optimal to pick a point of operation which is in the quality window but far enough away from the defect boundary such that common perturbations will not cause operations to fall outside the coating window.

It will be appreciated by those of ordinary skill that coating windows comprising graphs of other parameters are possible. For example, it is common to graph web speed versus layer thickness ratio. Any combination of two or three relevant coating parameters may be graphed in order to determine a coating window and an inner quality window.

**Trouble Shooting**

During production, as just noted, perturbations or other irregularities may occur that introduce defects into the quality of the film. Thus, it is advantageous, in accordance with the present invention, to be able to correct such defects as soon as possible, in order to minimize their degree and duration. If possible, such "trouble shooting" should occur during coating so that operations do not have to cease.

One of the more common defective conditions, as described above, is upstream leakage. If this occurs during operation, the coating gap may be increased to reduce the pressure drop along the bead. Alternatively, the elimination of upstream leakage may be accomplished by a change of die angle of attack which produces a higher downstream coating gap and a lower upstream coating gap (i.e., a less negative angle of attack). Other means, such as liquid viscosity adjustment, can be used to control upstream leakage.

Another defect is "de-wetting." If, in the film forming region, a perturbation affects the surface of the film, one or more layers may retract from the underlying layers or substrate leaving a void. This condition can be corrected by lowering the surface tension of the upper layers by, for example, increasing the surfactant in those layers. Also, the coating speed can be reduced in order to maintain the dynamic surface tension of the liquid of the film forming region at or below the stable level.

**Multilayer Die Coating Apparatus**

Referring to FIG. 6, there is shown a close-up cross-sectional view of a preferred embodiment of a multilayer die 20 of the present invention. It is understood that the present die apparatus can be utilized in accordance with dies and other coating techniques well known to those of ordinary skill in the art to produce successful multilayer products.

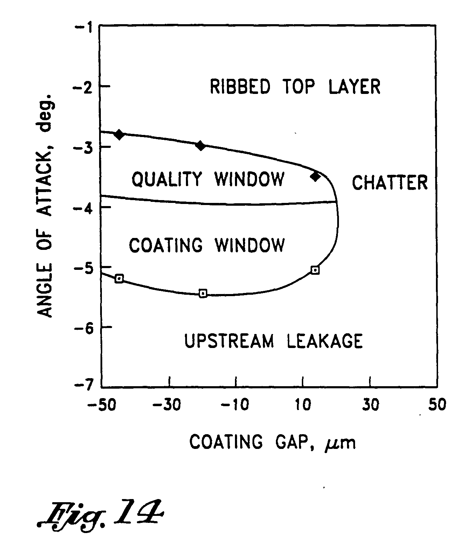

Although similar to FIG. 4, this die 20 is comprised of upstream and downstream die sections 50a and 50c, as well as a middle section 50b separating the two. Formed between these various sections are an upstream feed gap 52 and a downstream feed gap 54. The liquid from the upstream feed gap 52 flows onto the web 22 to form a bottom layer 58, while the liquid from the downstream feed gap 54 flows onto the bottom layer to form a top layer 56. It will be noted that the angle formed between these two feed gaps 52, 54 is approximately 30 degrees, which advantageously provides a good construction for the machining of a middle lip 60b formed on the distal end of the middle section 50b. It will also be noted from FIG. 6 that the lips 60a and 60c of the upstream and downstream die sections 50a,c form a stepped or staircase configuration with respect to the middle lip 60b in order to regulate the pressure gradient in this region. The importance of this relationship will be described and illustrated in more detail in connection with FIG. 7.

It will be noted in FIGS. 6 and 7 that this stepped lip configuration results in various coating gaps. For ease of reference, the subscript b will refer to the bottom layer 58 while the subscript **t** will refer to the top layer 56. Thus, the coating gap of the bottom layer ($c.g._b$) is characterized by two different values, one under the upstream lip 60a and one under the middle lip 60b. The coating gap of the top layer ($c.g._t$) is characterized by a larger value. As noted above, these coating gaps bear important relationships to the downstream film thickness of the respective flows which are formed thereby. Thus, for example, the bottom coating gap bears an important relationship in terms of pressure gradient with the downstream film thickness of the bottom layer 58 ($f.t._b$), while the coating gap of the top layer 56 bears an important relationship with the total downstream film thickness ($f.t._t$) (it is perhaps helpful to note that the subscript t may refer not only to the top layer, but also to the "total" thickness of the downstream film) which includes the sum of the bottom and top layers. This is because the coating gap analysis, in determining pressure gradient, must be based on the total flow at that gap, including the flow approaching the web 22 at that position as well as all previous flows and layers resulting therefrom.

It will be further noted from FIG. 6 that the bottom coating gap is less than the top coating gap in order to form the "step" described above. This step in the middle lip 60b with respect to the downstream lip 60c occurs in a very important interface area where the two flows converge at the downstream feed gap 54. Thus, an important aspect of the present invention is a design process which results in particular middle lip 60b and downstream lip 60c geometries, including the length of each lip in this region. These are also described in more detail below in connection with FIG. 7.

Finally, it will be noted in FIG. 6 that the lips 60 are each parallel to each other or, in other words, lie in parallel planes. However, the principles of the present invention are not limited to such design considerations. For example, the lips 60 can be angled or beveled with respect to one another, as described below and illustrated in more detail in connection with FIG. 12. In addition, a wide variety of other lip geometries and other methods for affecting the pressure gradient are within the principles of the present invention.

Referring to FIG. 7, there is shown a close-up view of the interface region, as illustrated more generally in FIG. 6. This drawing illustrates the complete interface between the top layer flow 56 from the bottom layer flow 58. The flow of each layer, as well as its respective direction, is shown by a series of arrows. Thus, the two layers are shown exhibiting steady, two-dimensional flow with the separating streamline optimally positioned at the stability point. This results in uniform layers in terms of cross web and down web cross-sectional thickness. This type of stable, two-dimensional flow results in good multilayer product performance.

As noted above, in order to achieve such stable flow, it is important to avoid mixing between the two layers. This can be achieved, in one aspect of the present invention, by accurate control of the separating line of the two fluids. As shown in FIG. 7, best coating results are achieved when this separating line coincides with the downstream corner 62 of the middle lip 60b, referred to as the stability point. In the present invention, pressure gradients in the flow are regulated to fix or lock the separating line of the top and bottom flows at this stability point 62. Preferably, the pressure gradient under the middle lip 60b (and in particular the downstream corner 62 of the middle lip 60b) is not greater than the pressure gradient which would cause recirculation of the top layer under the middle lip. Thus, the flow of the top layer does not have a tendency to invade the bottom layer coating gap in the upstream direction. This pressure situation tends to fix the separating line at the stability point 62 under the downstream lip.

As noted above, this advantage is achieved in one aspect of the present die apparatus by stepping the die lips away from the web 22 in the downstream direction. This step is shown as dimension A in FIG. 7. The magnitude of this step may fall within a wide range of dimensions which may be optimized for a given set of coating conditions. However, preferably, this distance A will fall in the range of 0.102 millimeters (0.004 inches).

At the same time, however, as noted above, in order to achieve the advantages of the present invention, these lips must be appropriately positioned with respect to the web 22 in order to achieve the proper coating gaps. For example, if the bottom coating gap (c.g.$_b$) is greater than three times the bottom film thickness (f.t.$_b$), a large positive pressure gradient will be developed just upstream of the interface area, as illustrated in FIG. 5d. Thus, a negative velocity profile may occur, causing recirculation in the bottom layer under the middle lip 60b. This recirculation may have the effect of pulling the top layer upstream and away from the stability point 62, thus causing, like most recirculations on this scale, the flow in this region to vary from its 1-dimensional or rectilinear pattern. This condition is illustrated in FIG. 8, and has all the disadvantages described above. On the other hand, if the bottom coating gap is a substantial amount less than two times the film thickness (f.t.$_b$), although the desirable negative pressure gradient will be generated, it may be too high, thus resulting in upstream leakage, high shear rates, etc. Thus, preferably, the bottom coating gap should be maintained at approximately two times the film thickness.

In addition, the coating gap under the downstream lip 60c (c.g.,) should be in the range of one to two times the total film thickness (f.t.$_t$). Again, if it is too great, the pressure gradient under the downstream lip may be sufficiently large to cause the separating line to move up into the downstream feed gap and to separate from the middle die at a point on the upstream wall of such feed gap, as illustrated in FIG. 9. This flow condition causes a closed recirculation in the bottom layer flow and results in film defects. Thus, there are a number of trade-offs which require careful balancing of these parameters in order to achieve accurate pressure gradient control.

Referring again to FIG. 7, it will be noted that the upstream lip 60a is also stepped toward the web 22 with respect to the middle lip 60b. This also has the result of decreasing the coating gap and increasing the pressure gradient upstream. This situation will assist in sealing the bead 42 under the die lips. In fact, this coating gap is dictated by the following rationales. The pressure drop developed along this region must match the pressure drop through the liquid along the downstream portion of the flow, plus any differential pressure imposed by the ambient air surrounding the liquid at its downstream and at its upstream interfaces. Thus, the coating gap under the upstream lip 60a can be used to balance these pressure forces. It has been found that a slight step (illustrated as dimension B in FIG. 7) on the order of about 0-.102 mm (0-.004 inches) is suitable.

Moreover, because of the sensitivity of this process, it will be appreciated that the total step between the upstream lip 60a and the downstream lip 60c (i.e., A+B) should also be carefully regulated. Thus, it has been found that total steps in the range of about 0-.203 mm (0-.008 inches) are advantageous. In addition, the feed gap dimension should also be carefully maintained to be about not more than five times the wet film thickness of the film being fed through that gap. If this gap is excessive, recirculations can occur in the feed gap, as illustrated in FIG. 13. Thus, these dimensions (C and D in FIG. 7) can each vary in the range of about 0.025-.381 mm (0.001-.015 inches).

Another important aspect of the present die apparatus which assists in maintaining proper coating gaps and minimizing shear rates is the length of the lips. As shown in FIG. 7, the length of the downstream lip 60c ($L_d$) may be anywhere in the range of about 0.1-3 mm, with about 0.8-1.2 mm being preferable. However, the length of this lip should be minimized so as to reduce the shearing of the multilayer film, which could lead to three-dimensional flows and uneven film formation. The length of the middle lip 60b ($L_m$) can also fall within the range of about 0.1-3 mm, with about 0.3-.7 mm being preferable. The length of this lip should be minimized so as to reduce the possibility that the upstream portion, when subject to changes in die angle of attack, will approach a coating gap of three times the film thickness. However, the lip must be long enough to allow the bottom layer flow to develop into a rectilinear flow. Finally, the upstream lip 60a length is less critical, since there is minimal flow along that lip. However, an increased lip length in this region will assist in sealing the flow.

As mentioned, it is well known to place a slight negative angle of attack of the die 20 with respect to the web 22 in order to produce a converging downstream lip 60c. Thus, FIG. 10 illustrates the multilayer die 20 of the present invention turned clockwise at a negative angle of attack ($\alpha$) with respect to the web 22. Thus, angles of attack in the range of about zero to negative 5 degrees have been found to be appropriate for this purpose. It will also be appreciated that this angle of attack changes the coating gap at the upstream edge of all of the lips, thus affecting the performance of the pressure gradient regulator of the present invention. Thus, even if the coating gap at the downstream edges remains the same at its appropriate dimension, depending upon the length of the lips and taking into consideration the curvature of the roll 26, the coating gap at the upstream edges of the lips may exceed the desired value and bring the operation outside the coating window. Thus, the longer the lips and the greater the negative angle of attack, the more likely it is for coating conditions to fall outside the operating window. This situation is illustrated in FIG. 11, which illustrates recirculations under both the middle and downstream lips.

Accordingly, in another aspect of the present die apparatus the upstream and the downstream lips of the die 20 may be beveled in order to minimize these effects. Thus, for example, if the downstream lip 60c is beveled by an angle γ, as shown in FIG. 12, then the need to rotate the die 20 to a negative angle of attack is possibly eliminated. This allows greater control in the coating gap ($c,g._t$) along this downstream die lip. Likewise, with a convergent beveled downstream lip 60c, the middle lip 60b can be maintained preferably flat, as illustrated. Again, the coating gap under this important middle lip 60b ($c.g._t$) can be carefully controlled in the absence of angle of attack adjustment. That is, it is much less likely for the coating gap ($c.g._b$) to exceed three times the film thickness ($f.t._b$), especially at the upstream edges of the middle lip 60b. However, it should still be noted that the step between the middle and downstream lips, as discussed above in connection with FIG. 7, still exists.

Likewise, certain advantages can be achieved by beveling the upstream lip 60a in a diverging manner by an angle β, as shown in FIG. 12. This divergent angle can be used to seal the bead 42 and adjust pressure drop across the bead. Thus, it has been found that downstream lip 60c bevels in the range of about 0-5 degrees are appropriate, while upstream lip 60a bevels in the range of about 0-2 degrees are preferable. As noted, these bevels improve the optimization of the coating process, increase the size of the operating window, and reduce the precision which would otherwise be required in coating.

In conclusion, the method and apparatus of the present invention represents a marked advancement in the multilayer coating art. It should be understood that the scope of the present invention is not to be limited by the illustrations or foregoing description thereof, but rather by the appended claims, and certain variations and modifications of this invention will suggest themselves to one of ordinary skill in the art.

**Claims**

**1.**   A method of manufacturing a multi-layer product on a substrate (22), comprising the step of substantially simultaneously coating two or more layers of liquid (56, 58) onto said substrate (22) using a slot coating process, said two or more layers (56, 58) comprising at least one lower layer (58), zero or more middle layers, and at least one top layer (56), the method **characterized by** said slot coating process using a die (20) adjusted with respect to said substrate (22) so as to adjust the pressure gradients of said two or more layers (56, 58), said die (20) being adjusted with respect to said substrate (22) for each of said zero or more middle layers and at least one top layer such that:

$$0 \le \frac{dp}{dx} \le \frac{2}{9}\frac{\mu\bar{u}}{h^2}$$

wherein $\mu$ represents the combined viscosity of the liquid of said layer and any previously coated layers, $\bar{U}$ is the velocity of the substrate, h is the total downstream wet film thickness of said layer including any previously coated

layers, further wherein

$$\frac{dp}{dx} = \frac{12\mu\bar{u}}{a^3}\left(\frac{a}{2} - h\right)$$

wherein "a" is the coating gap of said layer.

2.  The method of Claim 1, wherein said slot coating process comprises an interference coating process.

3.  The method of Claim 1, wherein said slot coating process comprises a proximity coating process.

4.  The method of any one of Claims 1-3, wherein said liquid layers (56, 58) are coated onto a moving substrate (22) using a die (20), two contiguous layers of said liquids forming a separating line in their interface region where they first become contiguous, the method further comprising the step of:
    regulating the pressure gradients of said contiguous layers in the interface region so as to be not greater than that which would cause recirculation in said contiguous layers.

5.  The method of Claim 4, wherein the step of regulating the pressure gradients of said contiguous layers comprises the step of positioning the location of said separating line with respect to said die (20) so that the flow of a top layer (56) does not invade the flow of a bottom layer (58).

6.  The method of Claim 4, further comprising the step of regulating the viscosity of a top layer (56) so as to be greater than the viscosity of a bottom layer (58).

7.  The method of Claim 6, further comprising the step of regulating the viscosity of said top layer (56) so as to be greater than the viscosity of said bottom layer (58) at the higher rates of travel of said substrate (22).

8.  The method of Claim 4, further comprising the step of regulating the viscosity of a top layer (56) so as to be within the range of 50% less than the viscosity of a bottom layer (58) to 100% greater than the viscosity of said bottom layer (58).

9.  The method of Claim 4, further comprising the step of regulating the viscosity of a top layer (56) so as to be 30% greater than the viscosity of a bottom layer (58).

10. The method of Claim 4, further comprising the step of regulating the surface tension of a top layer (56) so as to be less than the surface tension of a bottom layer (58).

11. The method of Claim 4, wherein said die (20) comprises a downstream lip (60c) and an upstream lip (60a), the method further comprising the step of positioning said separating line at the downstream edge of said upstream lip.

12. The method of Claim 4, wherein the step of regulating the pressure gradients of said contiguous layers in the interface region comprises the step of adjusting the coating gap between said die (20) and said substrate (22).

13. The method of Claim 12, further comprising the step of adjusting the coating gap just downstream of the interface region so as to be greater than the coating gap just upstream of the interface region.

14. The method of Claim 12, wherein the step of adjusting the coating gap comprises the step of adjusting the angle of attack of said die (20) with respect to a plane which is substantially parallel to the approximate plane of said substrate.

15. The method of Claim 14, wherein the step of adjusting the coating gap comprises the step of adjusting the angle of attack of said die (20) so that said die (20) is convergent with said substrate (22) in the direction of said substrate travel.

16. The method of Claim 12, wherein said die (20) comprises a downstream lip (60c), in the direction of substrate travel, an upstream lip (60a), and a middle lip (60b) positioned between said downstream lip (60c) and said upstream lip (60a), wherein the step of adjusting the coating gap further comprises the step of forming an angle on said downstream lip (60c) so as to be convergent with said substrate (22) in the direction of substrate travel.

17. The method of Claim 16, further comprising the step of forming an angle on said middle lip (60b) so as to lie in a plane which is substantially parallel to the approximate plane of said substrate (22).

18. The method of Claim 16, further comprising the step of forming an angle on said upstream lip (60a) so as to be divergent with respect to said substrate (22) in the direction of substrate travel.

19. The method of Claim 17, further comprising the step of forming an angle on said upstream lip (60a) so as to be divergent with respect to the substrate (22) in the direction of substrate travel.

20. A die adapted to coat any number of layers of a liquid onto a moving substrate (22), said die comprising:

an upstream lip (60a);
a downstream lip (60c), said downstream lip being located downstream from said upstream lip (60a) in the sense of substrate travel; and
one or more middle lips (60b) positioned on said die between said upstream lip (60a) and said downstream lip (60c);
each of said middle lips (60b) being set back from said substrate (22) to form a coating gap therebetween for coating one of said layers onto said substrate (22) or onto layers previously coated thereon,
said die **characterized by** each of said middle lips (60b) being positioned on said die (20) such that, along the length of said lip, the minimum coating gap is not less than approximately two times the total downstream wet film thickness of said one layer and said previously coated layers, and the maximum coating gap is not more than approximately three times said total thickness.

21. The die of Claim 20, wherein said downstream lip (60c) is set back from said substrate (22) to form a coating gap therebetween for coating a final layer onto said previously coated layers, said downstream lip (60c) being positioned on said die (20) such that, along the length of said lip, the minimum coating gap is not less than approximately the total downstream wet film thickness of said any layers, and the maximum coating gap is not more than approximately two times said total thickness.

22. The die of Claim 20, wherein one of said middle lips (60b) comprises a first lip and said downstream lip (60c) comprises a second lip, and wherein said first and second lips lie in parallel planes.

23. The die of Claim 22, wherein the planes of said first and second lips define a step away from said substrate (22) in the direction of travel of said substrate.

24. The die of Claim 20, wherein one of said middle lips (60b) comprises a first lip and said downstream lip (60c) comprises a second lip, and wherein said first and second lips lie in intersecting planes.

25. The die of Claim 22, wherein said second lip is convergent with respect to said substrate (22) in the direction of travel of said substrate.

26. The die of Claim 25, wherein said plane of said second lip forms an angle between about 0-5 degrees with a plane approximately parallel to the plane of said substrate (22).

27. The die of Claim 22, wherein said first and second lips lie in parallel planes separated by a distance ranging between about 0-0.120 mm (0-0.004 inches).

28. The die of Claim 22, wherein said first and second lips are generally separated by the distal opening of a feed gap (54), said feed gap ranging between about 0.0254-0.381 mm.

29. The die of Claim 22, wherein said upstream lip (60a) further comprises a third lip formed on a distal end of said die (20), said third lip being upstream from said first lip in the sense of substrate travel, said third lip being set forward with respect to said first lip in a direction substantially perpendicular to said substrate (22).

**30.** The die of Claim 29, wherein said third lip is divergent with respect to said substrate in the direction of travel of said substrate (22), said plane of said first lip forming an angle between about 0-2 degrees with a plane approximately parallel to the plane of said substrate (22).

**31.** The die of Claim 29, wherein said first, second and third lips lie in substantially parallel planes, said planes of said first and third lips separated by a distance ranging between about 0-0.102 mm (0-0.004 inches).

**32.** The die of Claim 29, wherein said first, second and third lips lie in substantially parallel planes, said planes of said first and third lips separated by a distance ranging between about 0-0.203 mm.

**33.** The die of Claim 20, wherein said second lip has a length ranging between about 0.1-3.0 mm.

**34.** The die of Claim 33, wherein said second lip has a length ranging between about 0.8-1.2 mm.

**35.** The die of Claim 22, wherein said [second] first lip has a length ranging between about 0.1-3.0 mm.

**36.** The die of Claim 35, wherein said [second] first lip has a length ranging between about 0.3-0.7 mm.

**37.** The die of Claim 29, wherein said third lip has a length ranging between about 1.5-2.5 mm.

**38.** The die of Claim 22, wherein said die (20) is adapted to be positioned with respect to said substrate (22) such that a first distance separates said substrate from said second lip and a second distance separates said substrate from said first lip, said first distance being greater than said second distance.

**39.** The die of Claim 38, wherein said first distance is approximately one to two times the total thickness of said layers coated onto said substrate (22).

**40.** The die of Claim 38, wherein said second distance is approximately 2-3 times the thickness of said bottom layer (58) coated onto said substrate (22).

**41.** The die of Claim 38, wherein said first distance is adequate such that recirculations in the flow below said second lip are substantially avoided.

**42.** The die of Claim 22, wherein said first and second lips are generally separated by the distal opening of a first feed gap (54) and said first and third lips are generally separated by the distal opening of a second feed gap (52), said first and second feed gaps forming planes converging in a distal direction toward said substrate by an angle of about 30 degrees.

**43.** The die of Claim 42, wherein said first and second feed gaps are adequate such that recirculation of said layers in said first and second feed gaps near said distal openings is substantially avoided.

**44.** The die of Claim 22, wherein said first and said second lips are generally separated by the distal opening of a feed gap (54), said die (20) adapted to be positioned with respect to said substrate (22) such that said feed gap (54) forms an angle of attack measured positively in the direction opposite the substrate travel from a plane substantially normal to said substrate (22), said angle ranging between about Q to negative 5 degrees.

**45.** The die of Claim 22, wherein a pressure gradient regulator is formed on said die for controlling the position of a separating line defined by two contiguous layers where they first become contiguous.

**46.** The die of Claim 45, wherein said pressure gradient regulator is formed on said first lip.

**47.** The die of Claim 46, wherein said pressure gradient regulator is formed on the downstream corner (62) of said first lip.

**Patentansprüche**

**1.** Verfahren zur Herstellung eines Mehrschichtproduktes auf einem Substrat (22) mit der Stufe, in der man im wesentlichen gleichzeitig zwei oder mehr Flüssigkeitsschichten (56, 58) auf dem Substrat (22) unter Verwendung eines Schlitzbeschichtungsverfahrens als Beschichtung aufbringt, wobei diese zwei oder mehr Schichten (56, 58) wenigstens eine untere Schicht (58), null oder mehr Mittelschichten und wenigstens eine Deckschicht (56) umfassen, **dadurch gekennzeichnet, daß** das Schlitzbeschichtungsverfahren ein bezüglich des Substrates (22) so eingestelltes Werkzeug (20) verwendet, daß die Druckgradienten der zwei oder mehr Schichten (56, 58) eingestellt werden, und das Werkzeug (20) in bezug auf das Substrat (22) für jede der null oder mehr Mittelschichten und wenigstens eine Deckschicht derart eingestellt wird, daß

$$0 \leq \frac{dp}{dx} \leq \frac{2\mu\bar{u}}{9h^2}$$

gilt, worin μ die vereinigte Viskosität der Flüssigkeit dieser Schicht und irgendwelche vorausgehend als Beschichtung aufgebrachter Schichten bedeutet, ü die Geschwindigkeit des Substrates ist, h die gesamte Abstrom-Naßfilmdicke der Schicht einschließlich vorausgehend als Beschichtung aufgebrachter Schichten ist und worin weiterhin

$$\frac{dp}{dx} = \frac{12\,\mu\bar{u}}{a^3}\left(\frac{a}{2} - h\right)$$

gilt, worin "a" der Beschichtungsspalt dieser Schicht ist.

2. Verfahren nach Anspruch 1, worin das Schlitzbeschichtungsverfahren ein Interferenzbeschichtungsverfahren umfaßt.

3. Verfahren nach Anspruch 1, worin das Schlitzbeschichtungsverfahren ein Verfahren durch Beschichtung aus kurzer Entfernung ist.

4. Verfahren nach einem der Ansprüche 1 bis 3, worin die Flüssigkeitsschichten (56, 58) als Überzug auf einem sich bewegenden Substrat (22) unter Verwendung eines Werkzeugs (20) aufgebracht werden, wobei die beiden sich berührenden Schichten der Flüssigkeiten in ihrem Grenzflächenbereich eine Trennlinie bilden, wo sie zunächst in Berührung kommen, wobei das Verfahren weiterhin die Stufe umfaßt, in der man die Druckgradienten der sich berührenden Schichten in dem Grenzflächenbereich so reguliert, daß sie nicht größer als jener sind, welcher eine Rezirkulation in den einander berührenden Schichten verursachen würde.

5. Verfahren nach Anspruch 4, bei dem die Stufe einer Regulierung der Druckgradienten der einander berührenden Schichten die Stufe umfaßt, in der man die Lage der Trennlinie unter Bezug auf das Werkzeug (20) so positioniert, daß der Fluß einer Deckschicht (56) nicht in den Fluß einer Bodenschicht (58) einbricht.

6. Verfahren nach Anspruch 4 weiterhin mit der Stufe, in der man die Viskosität der Deckschicht (56) so reguliert, daß sie größer als die Viskosität einer Bodenschicht (58) ist.

7. Verfahren nach Anspruch 6 weiterhin mit der Stufe, in der man die Viskosität der Deckschicht (56) so reguliert, daß sie größer als die Viskosität der Bodenschicht (58) bei den höheren Laufgeschwindigkeiten des Substrates (22) ist.

8. Verfahren nach Anspruch 4 weiterhin mit der Stufe, in der man die Viskosität einer Deckschicht (56) so reguliert, daß sie in dem Bereich von 50 % weniger als die Viskosität einer Bodenschicht (58) bis 100 % größer als die Viskosität der Bodenschicht (58) ist.

9. Verfahren nach Anspruch 4 weiterhin mit der Stufe, in der man die Viskosität einer Deckschicht (56) so reguliert, daß sie 30 % größer als die Viskosität der Bodenschicht (58) ist.

10. Verfahren nach Anspruch 4 weiterhin mit der Stufe, in der man die Oberflächenspannung einer Deckschicht (56) so reguliert, daß sie geringer als die Oberflächenspannung einer Bodenschicht (58) ist.

**11.** Verfahren nach Anspruch 4, bei dem das Werkzeug (20) einen Abstromrand (60c) und einen Aufstromrand (60a) umfaßt, wobei das Verfahren weiterhin die Stufe einschließt, in der man die Trennlinie an der Abstromkante des Aufstromrandes positioniert.

**12.** Verfahren nach Anspruch 4, bei dem die Stufe einer Regulierung der Druckgradienten der einander berührenden Schichten in dem Grenzflächenbereich die Stufe umfaßt, in der man den Beschichtungsspalt zwischen dem Werkzeug (20) und dem Substrat (22) einstellt.

**13.** Verfahren nach Anspruch 12 weiterhin mit der Stufe, in der man den Beschichtungsspalt gerade abstromwärts von dem Grenzflächenbereich so einstellt, daß er größer als der Beschichtungsspalt gerade aufstromwärts von dem Grenzflächenbereich ist.

**14.** Verfahren nach Anspruch 12, bei dem die Stufe einer Einstellung des Beschichtungsspaltes die Stufe umfaßt, in der man den Anstellwinkel des Werkzeugs (20) in bezug auf die Ebene, welche im wesentlichen parallel zu der ungefähren Ebene des Substrates ist, einstellt.

**15.** Verfahren nach Anspruch 14, bei dem die Stufe einer Einstellung des Beschichtungsspaltes die Stufe umfaßt, in der man den Anstellwinkel des Werkzeugs (20) so einstellt, daß das Werkzeug (20) mit dem Substrat (22) in der Richtung des Substratlaufes konvergiert.

**16.** Verfahren nach Anspruch 12, bei dem das Werkzeug (20) einen Abstromrand (60c) in der Richtung des Substratlaufes, einen Aufstromrand (60a) und einen Mittelrand (60b), der zwischen dem Abstromrand (60c) und dem Aufstromrand (60a) angeordnet ist, umfaßt, wobei die Stufe einer Einstellung des Beschichtungsspaltes weiterhin die Stufe umfaßt, in der man auf dem Abstromrand (60c) solchermaßen einen Winkel bildet, daß dieser mit dem Substrat (22) in der Richtung des Substratlaufes konvergiert.

**17.** Verfahren nach Anspruch 16 weiterhin mit der Stufe, in der man auf dem Mittelrand (60b) einen Winkel derart bildet, daß er in einer Ebene liegt, welche im wesentlichen parallel zu der ungefähren Ebene des Substrates (22) ist.

**18.** Verfahren nach Anspruch 16 weiterhin mit der Stufe, in der man auf dem Aufstromrand (60a) einen Winkel derart bildet, daß er in bezug auf das Substrat (22) in der Richtung des Substratlaufes divergiert.

**19.** Verfahren nach Anspruch 17 weiterhin mit der Stufe, in der man auf dem Aufstromrand (60a) einen Winkel derart bildet, daß er in bezug auf das Substrat (22) in der Richtung des Substratlaufes divergiert.

**20.** Werkzeug zur Beschichtung eines sich bewegenden Substrates (22) mit einer Anzahl von Schichten einer Flüssigkeit mit

einem Aufstromrand (60a),

einem Abstromrand (60c), wobei dieser Abstromrand abstromwärts von dem Aufstromrand (60a) im Sinne des Substratlaufes positioniert ist, und

einem oder mehreren Mittelrändern (60b), die an dem Werkzeug zwischen dem Aufstromrand (60a) und dem Abstromrand (60c) angeordnet sind,

wobei jeder der Mittelränder (60b) von dem Substrat (22) zurückgesetzt ist, um einen Beschichtungsspalt dazwischen für die Aufbringung einer dieser Schichten als Überzug auf dem Substrat (22) oder auf vorher als Beschichtung aufgebrachten Schichten zu bilden, wobei das Werkzeug **dadurch gekennzeichnet ist, daß** jeder der Mittelränder (60b) auf dem Werkzeug (20) derart positioniert ist, daß entlang der Länge des Randes der Mindestbeschichtungsspalt nicht weniger als etwa das Zweifache der gesamten Abstrom-Naßfilmdicke der einen Schicht und der vorher als Beschichtung aufgebrachten Schichten ist und der maximale Beschichtungsspalt nicht größer als etwa das Dreifache dieser Gesamtdicke ist.

**21.** Werkzeug nach Anspruch 20, bei dem der Abstromrand (60c) von dem Substrat (22) zurückgesetzt ist, um einen Beschichtungsspalt dazwischen für die Aufbringung einer Beschichtungsendschicht auf den vorher als Beschichtung aufgebrachten Schichten zu bilden, wobei dieser Abstromrand (60c) auf dem Werkzeug (20) derart positioniert ist, daß entlang der Länge des Randes der Mindestbeschichtungsspalt nicht geringer als etwa die gesamte Abstrom-Naßfilmdicke dieser Schichten ist und der maximale Beschichtungsspalt nicht größer als etwa das Zweifache dieser Gesamtdicke ist.

22. Werkzeug nach Anspruch 20, bei dem einer der Mittelränder (60b) einen ersten Rand umfaßt und der Abstromrand (60c) einen zweiten Rand umfaßt und die ersten und zweiten Ränder in parallelen Ebenen liegen.

23. Werkzeug nach Anspruch 22, bei dem die Ebenen des ersten und zweiten Randes eine Stufe von dem Substrat (22) in der Richtung des Laufs des Substrates begrenzen.

24. Werkzeug nach Anspruch 20, bei dem einer der Mittelränder (60b) einen ersten Rand umfaßt und der Abstromrand (60c) einen zweiten Rand umfaßt und der erste und zweite Rand in sich schneidenden Ebenen liegen.

25. Werkzeug nach Anspruch 22, bei dem der zweite Rand in bezug auf das Substrat (22) in der Richtung des Laufs des Substrates konvergiert.

26. Werkzeug nach Anspruch 25, bei dem die Ebene des zweiten Randes einen Winkel zwischen etwa 0 und 5° mit einer Ebene etwa parallel zu der Ebene des Substrates (22) bildet.

27. Werkzeug nach Anspruch 22, bei dem der erste und zweite Rand in parallelen Ebenen liegen, die durch einen Abstand im Bereich zwischen etwa 0 und 0,120 mm (0 bis 0,004 in) getrennt sind.

28. Werkzeug nach Anspruch 22, bei dem der erste und zweite Rand allgemein durch die distale Öffnung eines Beschickungsspaltes (54) getrennt sind, wobei dieser Beschikkungsspalt im Bereich zwischen etwa 0,0254 und 0,381 mm liegt.

29. Werkzeug nach Anspruch 22, bei dem der Aufstromrand (60a) weiterhin einen dritten Rand umfaßt, der an einem distalen Ende des Werkzeugs (20) ausgebildet ist, wobei dieser dritte Rand aufstromwärts von dem ersten Rand im Sinne des Substratlaufes liegt und der dritte Rand in bezug auf den ersten Rand in einer Richtung im wesentlichen senkrecht zu dem Substrat (22) vorwärts versetzt ist.

30. Werkzeug nach Anspruch 29, bei dem der dritte Rand in bezug auf das Substrat in der Richtung des Laufs des Substrates (22) divergiert, die Ebene des ersten Randes einen Winkel zwischen etwa 0 und 2° mit einer Ebene etwa parallel zu der Ebene des Substrates (22) bildet.

31. Werkzeug nach Anspruch 29, bei dem der erste, zweite und dritte Rand in im wesentlichen parallelen Ebenen liegen, wobei diese Ebene des ersten und dritten Randes durch einen Abstand im Bereich zwischen etwa 0 und 0,102 mm (0 und 0,004 in) getrennt sind.

32. Werkzeug nach Anspruch 29, bei dem der erste, zweite und dritte Rand in im wesentlichen parallelen Ebenen liegen, wobei die Ebenen des ersten und dritten Randes durch einen Abstand im Bereich zwischen etwa 0 und 0,203 mm getrennt sind.

33. Werkzeug nach Anspruch 20, bei dem der zweite Rand eine Länge im Bereich zwischen etwa 0,1 und 3,0 mm hat.

34. Werkzeug nach Anspruch 33, bei dem der zweite Rand eine Länge im Bereich zwischen etwa 0,8 und 1,2 mm hat.

35. Werkzeug nach Anspruch 22, bei dem der (zweite) erste Rand eine Länge im Bereich zwischen etwa 0,1 und 3,0 mm hat.

36. Werkzeug nach Anspruch 35, bei dem der (zweite) erste Rand einen Länge im Bereich zwischen etwa 0,3 und 0,7 mm hat.

37. Werkzeug nach Anspruch 29, bei dem der dritte Rand eine Länge im Bereich zwischen etwa 1,5 und 2,5 mm hat.

38. Werkzeug nach Anspruch 22, bei dem das Werkzeug (20) so ausgebildet ist, daß es in bezug auf das Substrat (22) derart positioniert ist, daß ein erster Abstand das Substrat von dem zweiten Rand trennt und ein zweiter Abstand das Substrat von dem ersten Rand trennt, wobei der erste Abstand größer als der zweite Abstand ist.

**39.** Werkzeug nach Anspruch 38, bei dem der erste Abstand etwa das Ein- bis Zweifache der Gesamtdicke der Schichten ist, die auf dem Substrat (22) als Beschichtung aufgebracht sind.

**40.** Werkzeug nach Anspruch 38, bei dem der zweite Abstand etwa das Zwei- bis Dreifache der Dicke der Bodenschicht (58) ist, die auf dem Substrat (22) als Beschichtung aufgebracht ist.

**41.** Werkzeug nach Anspruch 38, bei dem der erste Abstand derart passend ist, daß Zirkulationen in dem Fluß unter dem zweiten Rand im wesentlichen vermieden werden.

**42.** Werkzeug nach Anspruch 22, bei dem der erste und zweite Rand allgemein durch die distale Öffnung eines ersten Beschickungsspaltes (54) getrennt sind und der erste und dritte Rand allgemein durch die distale Öffnung eines zweiten Beschickungsspaltes (52) getrennt sind, wobei der erste und zweite Beschickungsspalt Ebenen bilden, die in einer distalen Richtung zu dem Substrat in einem Winkel von etwa 30° konvergieren.

**43.** Werkzeug nach Anspruch 42, bei dem die ersten und zweiten Beschickungsspalte derart passend sind, daß eine Rezirkulation dieser Schichten in dem ersten und zweiten Beschickungsspalt nahe den distalen Öffnungen im wesentlichen vermieden wird.

**44.** Werkzeug nach Anspruch 22, bei dem der erste und zweite Rand allgemein durch die distale Öffnung des Beschickungsspaltes (54) getrennt sind, wobei das Werkzeug (20) so ausgebildet ist, daß es in bezug auf das Substrat (22) derart angeordnet ist, daß der Beschickungsspalt (54) einen Angriffswinkel bildet, der positiv in der Richtung entgegengesetzt zu dem Substratlauf von einer Ebene im wesentlichen normal zu dem Substrat (22) gebildet wird, wobei dieser Winkel im Bereich zwischen etwa 0 und negativ 5° liegt.

**45.** Werkzeug nach Anspruch 22, bei dem ein Druckgradientenregulator an dem Werkzeug zur Steuerung der Position einer Trennlinie gebildet ist, die von zwei in Berührung miteinander stehenden Schichten begrenzt ist, wo sie als erstes in Berührung kommen.

**46.** Werkzeug nach Anspruch 45, bei dem der Druckgradientenregulator auf dem ersten Rand ausgebildet ist.

**47.** Werkzeug nach Anspruch 46, bei dem der Druckgradientenregulator an der Abstromekke (62) des ersten Randes ausgebildet ist.

**Revendications**

**1.** Procédé de fabrication d'un produit multicouches sur un support (22), comprenant la phase consistant à appliquer par revêtement simultanément deux couches ou davantage de liquide (56, 58) sur ledit support (22) en utilisant une méthode de revêtement par fente, lesdites deux couches ou davantage (56, 58) comprenant au moins une couche inférieure (58), zéro couche centrale ou davantage, et au moins une couche supérieure (56), le procédé étant **caractérisé en ce que** ladite méthode de revêtement par fente utilise une filière (20) réglée par rapport audit support (22) de manière à régler les gradients de pression desdites deux couches ou davantage (56, 58), ladite filière (20) étant réglée relativement audit support (22) pour chacune desdites zéro couche centrale ou davantage et au moins une couche supérieure de manière que :

$$0 \le \frac{dp}{dx} \le \frac{2}{9}\,\frac{\mu\bar{u}}{h^2}$$

où $\mu$ représente la viscosité combinée du liquide de ladite couche et toute couche appliquée précédemment par revêtement, $\bar{U}$ est la vitesse du support, $h$ est l'épaisseur totale du film humide d'aval de ladite couche comprenant toute couche appliquée précédemment par revêtement, où en outre

$$\frac{dp}{dx} = \frac{12\mu\bar{u}}{a^3}\left(\frac{a}{2} - h\right)$$

EP 0 788 408 B1

où "a" est l'espace de revêtement de ladite couche.

2. Procédé selon la revendication 1, dans lequel ladite méthode de revêtement par fente comprend une méthode de revêtement à interférence.

3. Procédé selon la revendication 1, dans lequel ladite méthode de revêtement par fente comprend une méthode de revêtement à proximité.

4. Procédé selon l'une quelconque des revendications 1 à 3, dans lequel lesdites couches de liquide (56, 58) sont appliquées par revêtement sur un support mobile (22) en utilisant une filière (20), deux couches contiguës desdits liquides formant une ligne de séparation dans leur région d'interface où elles deviennent pour la première fois contiguës, le procédé comprenant en outre la phase consistant à :
réguler les gradients de pression desdites couches contiguës dans la région d'interface de manière qu'ils ne soient pas supérieurs à des gradients qui provoqueraient une recirculation dans lesdites couches contiguës.

5. Procédé selon la revendication 4, dans lequel la phase de régulation des gradients de pression desdites couches contiguës comprend la phase consistant à positionner ladite ligne de séparation par rapport à ladite filière (20) de manière que l'écoulement d'une couche supérieure (56) n'envahisse pas l'écoulement d'une couche inférieure (58).

6. Procédé selon la revendication 4, comprenant en outre la phase de régulation de la viscosité d'une couche supérieure (56) de manière qu'elle ne soit pas supérieure à la viscosité d'une couche inférieure (58).

7. Procédé selon la revendication 6, comprenant en outre la phase de régulation de la viscosité de ladite couche supérieure (56) de manière qu'elle ne soit pas supérieure à la viscosité de ladite couche inférieure (58) aux vitesses de déplacement les plus élevées dudit support (22).

8. Procédé selon la revendication 4, comprenant en outre la phase de régulation de la viscosité d'une couche supérieure (56) de manière qu'elle se situe dans une plage de viscosité par rapport à la viscosité d'une couche inférieure (58) allant de 50 % de moins à 100 % de plus que la viscosité de ladite couche inférieure (58).

9. Procédé selon la revendication 4, comprenant en outre la phase de régulation de la viscosité d'une couche supérieure (56) de manière qu'elle soit supérieure de 30 % à la viscosité d'une couche inférieure (58).

10. Procédé selon la revendication 4, comprenant en outre la phase de régulation de la tension de surface d'une couche supérieure (56) de manière qu'elle soit inférieure à la tension de surface d'une couche inférieure (58).

11. Procédé selon la revendication 4, dans lequel ladite filière (20) comprend une lèvre d'aval (60c) et une lèvre d'amont (60a), le procédé comprenant également la phase de positionnement de ladite ligne de séparation au bord d'aval de ladite lèvre d'amont.

12. Procédé selon la revendication 4, dans lequel la phase de régulation des gradients de pression desdites couches contiguës dans la région d'interface comprend la phase de réglage de l'espace de revêtement entre ladite filière (20) et ledit support (22).

13. Procédé selon la revendication 12, comprenant en outre la phase de réglage de l'espace de revêtement juste en aval de la région d'interface de manière qu'il soit supérieur à l'espace de revêtement juste en amont de la région d'interface.

14. Procédé selon la revendication 12, dans lequel la phase de réglage de l'espace de revêtement comprend la phase de réglage de l'angle d'attaque de ladite filière (20) par rapport à un plan qui est sensiblement parallèle au plan approximatif dudit support.

15. Procédé selon la revendication 14, dans lequel la phase de réglage de l'espace de revêtement comprend la phase de réglage de l'angle d'attaque de ladite filière (20) de manière que ladite filière (20) soit convergente avec ledit support (22) dans la direction de déplacement dudit support.

16. Procédé selon la revendication 12, dans lequel ladite filière (20) comprend une lèvre d'aval (60c), dans la direction de déplacement du support, une lèvre d'amont (60a), et une lèvre centrale (60b) positionnée entre ladite lèvre

24

d'aval (60c) et ladite lèvre d'amont (60a), dans lequel la phase de réglage de l'espace de revêtement comprend également la phase de formation d'un angle sur ladite lèvre d'aval (60c) de manière qu'elle soit convergente avec ledit support (22) dans la direction de déplacement du support.

17. Procédé selon la revendication 16, comprenant en outre la phase de formation d'un angle sur ladite lèvre centrale (60b) de manière qu'elle se situe dans un plan qui soit sensiblement parallèle au plan approximatif dudit support (22).

18. Procédé selon la revendication 16, comprenant en outre la phase de formation d'un angle sur ladite lèvre d'amont (60a) de manière qu'elle soit divergente par rapport audit support (22) dans la direction de déplacement du support.

19. Procédé selon la revendication 17, comprenant en outre la phase de formation d'un angle sur ladite lèvre d'amont (60a) de manière qu'elle soit divergente par rapport au support (22) dans la direction de déplacement du support.

20. Filière adaptée à appliquer par revêtement un nombre quelconque de couches d'un liquide sur un support mobile (22), ladite filière (20) comprenant :

une lèvre d'amont (60a) ;
une lèvre d'aval (60c), ladite lèvre d'aval étant située en aval de ladite lèvre d'amont (60a) dans la direction de déplacement du support ; et
une ou plusieurs lèvres centrales (60b) positionnées sur ladite filière (20) entre ladite lèvre d'amont (60a) et ladite lèvre d'aval (60c);
chacune desdites lèvres centrales (60b) étant placée en retrait dudit support (22) de manière à former un espace de revêtement entre eux afin d'appliquer par revêtement une desdites couches sur ledit support (22) ou sur des couches appliquées précédemment par revêtement sur le support,
ladite filière étant **caractérisée en ce que** chacune desdites lèvres centrales (60b) est positionnée sur ladite filière (20) de manière que, le long de ladite lèvre, l'espace de revêtement minimal ne soit pas inférieur à environ deux fois l'épaisseur totale de film humide d'aval de ladite couche et desdites couches appliquées précédemment par revêtement, et l'espace de revêtement maximal ne soit pas supérieur à environ trois fois ladite épaisseur totale.

21. Filière selon la revendication 20, dans laquelle ladite lèvre d'aval (60c) est placée en retrait dudit support (22) de manière à former un espace de revêtement entre eux afin d'appliquer par revêtement une couche finale sur lesdites couches appliquées précédemment par revêtement, ladite lèvre d'aval (60c) étant positionnée sur ladite filière (20) de manière que, le long de ladite lèvre, l'espace de revêtement minimal ne soit pas inférieur à environ l'épaisseur totale de film humide d'aval desdites couches, et l'espace de revêtement maximal ne soit pas supérieur à environ deux fois ladite épaisseur totale.

22. Filière selon la revendication 20, dans laquelle l'une desdites lèvres centrales (60b) comprend une première lèvre et ladite lèvre d'aval (60c) comprend une deuxième lèvre, et dans laquelle lesdites première et deuxième lèvres se situent dans des plans parallèles.

23. Filière selon la revendication 22, dans laquelle les plans desdites première et deuxième lèvres définissent un décrochement par rapport audit support (22) dans la direction de déplacement dudit support.

24. Filière selon la revendication 20, dans laquelle l'une desdites lèvres centrales (60b) comprend une première lèvre et ladite lèvre d'aval (60c) comprend une deuxième lèvre, et dans laquelle lesdites première et deuxième lèvres se situent dans des plans qui se coupent.

25. Filière selon la revendication 22, dans laquelle ladite deuxième lèvre est convergente par rapport audit support (22) dans la direction de déplacement dudit support.

26. Filière selon la revendication 25, dans laquelle ledit plan de ladite deuxième lèvre formant un angle entre 0 et 5 degrés avec un plan sensiblement parallèle au plan dudit support (22).

27. Filière selon la revendication 22, dans laquelle lesdites première et deuxième lèvres se situent dans des plans parallèles séparés d'une distance comprise entre environ 0 et 0,120 mm (0 et 0,004").

**28.** Filière selon la revendication 22, dans laquelle lesdites première et deuxième lèvres sont généralement séparées par l'ouverture distale d'un espace de distribution (54), ledit espace de distribution étant d'environ 0,0254-0,381 mm.

**29.** Filière selon la revendication 22, dans laquelle ladite lèvre d'amont (60a) comprend également une troisième lèvre formée sur une extrémité distale de ladite filière (20), ladite troisième lèvre étant en amont de ladite première lèvre dans la direction de déplacement du support, ladite troisième lèvre étant en saillie par rapport à ladite première lèvre dans une direction sensiblement perpendiculaire audit support (22).

**30.** Filière selon la revendication 29, dans laquelle ladite troisième lèvre est divergente par rapport audit support dans la direction de déplacement dudit support (22), ledit plan de ladite première lèvre formant un angle compris entre environ 0 et 2 degrés avec un plan sensiblement parallèle au plan dudit support (22).

**31.** Filière selon la revendication 29, dans laquelle lesdites première, deuxième et troisième lèvres se situent dans des plans sensiblement parallèles, lesdits plans desdites première et troisième lèvres séparés d'une distance comprise entre environ 0 et 0,102 mm (0 et 0,004").

**32.** Filière selon la revendication 29, dans laquelle lesdites première, deuxième et troisième lèvres se situent dans des plans sensiblement parallèles, lesdits plans desdites première et troisième lèvres séparés d'une distance comprise entre environ 0 et 0,203 mm.

**33.** Filière selon la revendication 20, dans laquelle ladite deuxième lèvre a une longueur comprise entre environ 0,1 et 3 mm.

**34.** Filière selon la revendication 33, dans laquelle ladite deuxième lèvre a une longueur comprise entre environ 0,8 et 1,2 mm.

**35.** Filière selon la revendication 22, dans laquelle ladite première [deuxième] lèvre a une longueur comprise entre environ 0,1 et 3 mm.

**36.** Filière selon la revendication 35, dans laquelle ladite première [deuxième] lèvre a une longueur comprise entre environ 0,3 et 0,7 mm.

**37.** Filière selon la revendication 29, dans laquelle ladite troisième lèvre a une longueur comprise entre environ 1,5 et 2,5 mm.

**38.** Filière selon la revendication 22, dans laquelle ladite filière (20) est adaptée à être positionnée par rapport audit support (22) de manière qu'une première distance sépare ledit support de ladite deuxième lèvre et une deuxième distance sépare ledit support de ladite première lèvre, ladite première distance étant supérieure à ladite deuxième distance.

**39.** Filière selon la revendication 38, dans laquelle ladite première distance est d'environ une à deux fois l'épaisseur totale desdites couches appliquées par revêtement sur ledit support (22).

**40.** Filière selon la revendication 38, dans laquelle ladite deuxième distance est d'environ 2 à 3 fois l'épaisseur de ladite couche inférieure (58) appliquée par revêtement sur ledit support (22).

**41.** Filière selon la revendication 38, dans laquelle ladite première distance est adéquate de manière que des recirculations dans l'écoulement au-dessous de ladite deuxième lèvre soient sensiblement évitées.

**42.** Filière selon la revendication 22, dans laquelle lesdites première et deuxième lèvres sont généralement séparées par l'ouverture distale d'un premier espace de distribution (54) et lesdites deuxième et troisième lèvres sont généralement séparées par l'ouverture distale d'un deuxième espace de distribution (52), lesdits premier et deuxième espaces de distribution formant des plans convergeant dans une direction distale vers ledit support d'un angle d'environ 30 degrés.

**43.** Filière selon la revendication 42, dans laquelle lesdits premier et deuxième espaces de distribution sont adéquats de manière qu'une recirculation desdites couches dans lesdits premier et deuxième espaces de distribution près desdites ouvertures distales soit sensiblement évitée.

44. Filière selon la revendication 22, dans laquelle lesdites première et deuxième lèvres sont généralement séparées par l'ouverture distale d'un espace de distribution (54), ladite filière (20) étant adaptée à être positionnée par rapport audit support (22) de manière que ledit espace de distribution (54) forme un angle d'attaque mesuré positivement dans la direction à l'opposé de la direction de déplacement du support depuis un plan sensiblement perpendiculaire audit support (22), ledit angle étant compris entre environ 0 et -5 degrés.

45. Filière selon la revendication 22, dans laquelle un régulateur de gradients de pression est formé sur ladite filière pour commander la position d'une ligne de séparation définie par deux couches contiguës à l'emplacement où les couches deviennent contiguës pour la première fois.

46. Filière selon la revendication 45, dans laquelle ledit régulateur de gradients de pression est formé sur ladite première lèvre.

47. Filière selon la revendication 46, dans laquelle ledit régulateur de gradients de pression est formé sur l'angle aval (62) de ladite première lèvre.

*Fig. 1*

*Fig. 2*

*Fig. 3*

Fig. 4

Fig. 5a

cg=2x  f.t.

$\left(\dfrac{dp}{dx}=0\right)$

Fig. 5b

cg<2x  f.t.

$\left(\dfrac{dp}{dx}<0\right)$

Fig. 5c

cg=3x  f.t.

$\left(\dfrac{dp}{dx}>0\right)$

Fig. 5d

cg>3x  f.t.

$\left(\dfrac{dp}{dx}>>0\right)$

30

_Fig. 6_

_Fig. 10_

_Fig. 12_

*Fig. 7*

EP 0 788 408 B1

*Fig.8*

*Fig. 9*

*Fig. 11*

*Fig. 13*

*Fig. 14*